Europäisches Patentamt

European Patent Office

Office européen des brevets

(19)

(11) **EP 1 045 233 A2**

(12) **EUROPEAN PATENT APPLICATION**

(43) Date of publication:
**18.10.2000 Bulletin 2000/42**

(51) Int. Cl.⁷: **G01J 5/20**

(21) Application number: **00108181.9**

(22) Date of filing: **13.04.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **14.04.1999 JP 10677099**

(71) Applicant: **NEC CORPORATION**
**Tokyo (JP)**

(72) Inventor: **Tanaka, Akio**
**Minato-ku, Tokyo (JP)**

(74) Representative:
**Glawe, Delfs, Moll & Partner**
**Patentanwälte**
**Postfach 26 01 62**
**80058 München (DE)**

(54) **Thermal functional device capable of high-speed response and a method of driving the device**

(57) A thermal functional device for enabling a faster thermal response speed is disclosed. A thermoelectric element that converts heat to an electrical signal, and an electrothermic element that is adjacent to the thermoelectric element and that converts an electrical signal to heat are disposed on the diaphragm of the thermal functional device. As a preferable embodiment, a reference thermoelectric element is disposed outside the diaphragm and outputs a reference signal. This reference signals and the output signals of the thermoelectric element are compared, and a compensating signal that compensates for the difference between the two signals is supplied to the electrothermic element. Application of thermal energy to the diaphragm causes the output signal of the thermoelectric element to change, and a compensating signal that corresponds to the accompanying change in the difference between the output signal and the reference signal is supplied to the electrothermic element. With the supply of the compensating signal, the electrothermic element is driven so as to offset the thermal energy applied to the diaphragm, whereby the diaphragm is maintained at a fixed temperature.

Fig. 6

**Description**

BACKGROUND OF THE INVENTION:

1. Field of the Invention:

The present invention relates to a thermal functional device, and more particularly to a thermal functional device such as a thermal infrared sensor for detecting the incidence of energy using thermoelectric conversion, a drive method for such a device, and an energy detector in which the device is applied.

2. Description of the Related Art:

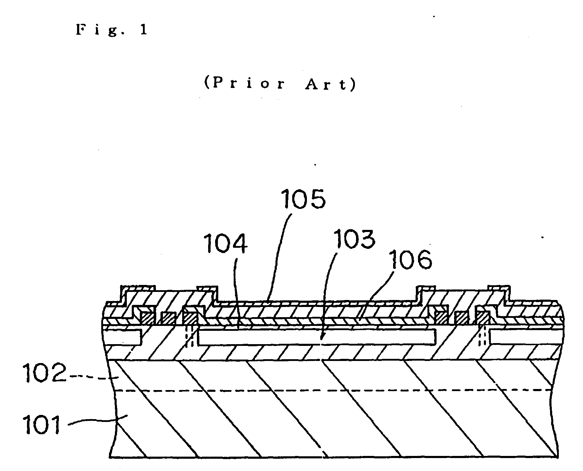

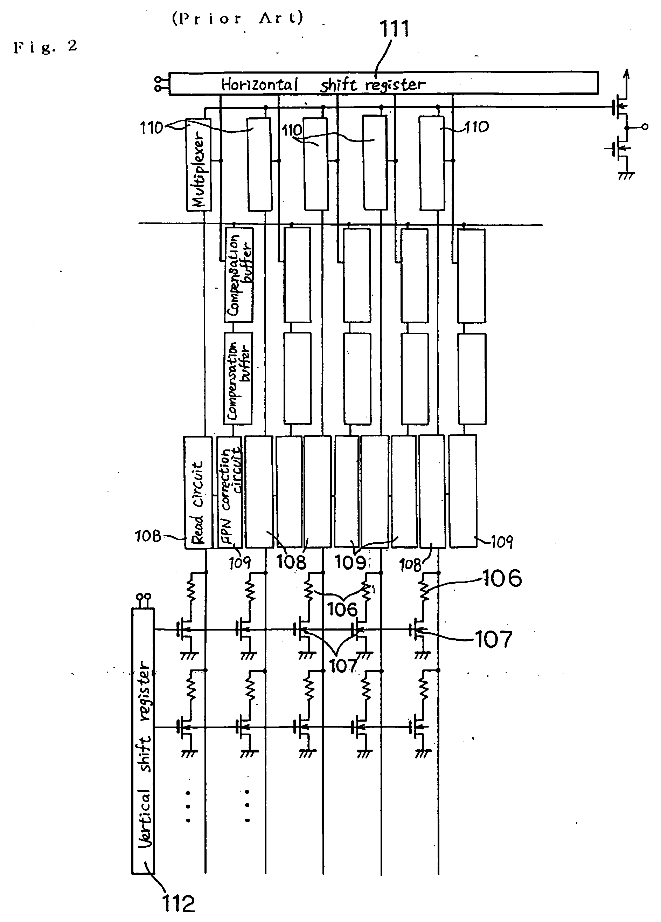

As one example of a thermal functional device of the prior art, Japanese Patent Application 315455/97 discloses a thermal infrared imaging device. Fig. 1 is a sectional view of the thermal infrared imaging device, and Fig. 2 is a circuit diagram.

In this infrared imaging device, a plurality of pixels in a matrix are integrated so as to obtain a two-dimensional infrared image. As shown in Fig. 1, circuit 102 is formed on the surface of semiconductor substrate 101, and infrared photodetectors (pixels) are then disposed in a matrix over this circuit. Each pixel includes thin-film diaphragm 104 provided over cavity 103, infrared absorbing layer 105 for absorbing infrared light provided over this diaphragm 104, and thermoelectric element 106 for converting heat to an electrical signal. As thermoelectric element 106, a bolometer is employed that uses, for example, titanium as the detection material.

As shown in Fig. 2, each thermoelectric element 106 is connected to: pixel switch 107 for selecting pixels, read circuit 108 for reading signals, FPN (Fixed Pattern Noise) correction circuit 109 for correcting variations in the resistance of each pixel, and multiplexer 110 for sequentially selecting signals from each read circuit 108. In addition, horizontal shift register 111 for controlling each multiplexer 110, and vertical shift register 112 for sequentially selecting each pixel switch 107 are further provided.

Infrared light that is incident to each pixel is converted to change in resistance by thermoelectric element 106, and this resistance change is then both converted to voltage change and amplified by read circuit 108. One read circuit 108 is formed in each column. The output of each read circuit 108 is sequentially selected by multiplexer 110 and outputted outside semiconductor substrate 101. On the other hand, vertical shift register 112 sequentially selects pixel switch 107 of each row and reads the output signals of thermoelectric elements 106 of the entire array.

Variation occurs in the resistance value at thermoelectric element 106 of each pixel, and since this variation influences the results of infrared detection when the degree of amplification of signals in read circuit 108 is high, amplification cannot be so increased. FPN correction circuits 109 are therefore provided that correct variations in resistance by varying the current in accordance with the variation in resistance of each pixel. Although not shown in the figures, digital FPN correction circuits that more accurately eliminate FPN, sensitivity correction circuits that correct variation in sensitivity of each pixel, defective pixel correction circuits that correct by inference from data of pixels that neighbor defective pixels, A/D conversion circuits and D/A conversion circuits for carrying out correction by these circuits, and frame memory are further provided.

Since this first example of the prior art not only requires a large number of pixels arranged in a matrix, but read circuit 108 and FPN correction circuit 109 for each column as well as the provision of various types of correction circuits, it entails both a higher cost and a larger size.

In contrast, the infrared detector disclosed in Japanese Patent Laid-open No. 187582/91 includes a linear array sensor in which a plurality of pyroelectric infrared detector elements are arranged in a row, and a rotatable stage that scans the linear array sensor in a horizontal direction. Compared to the first example of the prior art in which pixels are formed in a matrix, the sensor portion can be reduced in size and the area allotted to each pixel can be increased to raise sensitivity. However, even though the sensor portion is reduced in size, the rotatable stage mechanism is complex and may result in even greater size.

In the optical sensor disclosed in Japanese Patent Laid-open No. 122689/96, a single photodetector and optical scanner are formed on a semiconductor substrate. Light that is incident to the mirror of the optical scanner is reflected and projected to a target object, and the reflected light of the object is directed to a photodetector on the same substrate as the optical scanner. Light that is irradiated onto the object can be linearly scanned by moving the mirror of the optical scanner. The optical sensor disclosed in Japanese Patent Laid-open No. 240782/96 further develops this technique and enables two-dimensional scanning of the light irradiated onto the object by moving the mirror of the optical scanner. In addition, the x-ray imaging devices disclosed in Japanese Patent Laid-open No. 319880/92 include individually drivable micromirror groups and a photodetector unit. An image is formed from incident light in the micromirror group, and by driving each micromirror, this incident light can be sequentially led to the photodetector unit to enable detection of a two-dimensional image. This structure enables remarkable miniaturization of the optical sensor.

Japanese Patent Laid-open No. 206733/90 discloses a thermal infrared sensor. This infrared sensor is provided with a thermoelectric element and at least one of a Peltier element and a heating element on a diaphragm. The thermoelectric element detects the change in temperature that accompanies the incidence of infrared light on the diaphragm, thereby enabling detection of infrared light. Since there is a danger that the thermoelectric element will malfunction by responding not only to the temperature change caused by incidence of infrared light but also to the change in the substrate temperature brought about by the rise in ambient temperature, the device is constructed to maintain the diaphragm at a fixed temperature through the use of a Peltier element or heating element.

Since a thermal infrared detector normally uses a thermoelectric element to detect change in temperature on a diaphragm, the response speed of the thermal infrared detector with respect to incident infrared light is determined by the speed at which the diaphragm responds to infrared light and generates heat. The time required for the diaphragm to thermally respond to infrared light is indicated by a thermal time constant. This property is determined by, for example, the size of the diaphragm, a diaphragm measuring 50 μm by 50 μm normally having a response time of approximately 10 ms.

Miniaturization of the type of sensors described hereinabove enables higher-density packing, and higher detection speeds are being sought. At a thermal time constant of 10 ms, the slow thermal response speed raises a problem. When scanning an area measuring 100 pixels by 100 pixels with the above-described optical scanner of the prior art, for example, a time interval of 10 ms for each pixel results in a total time of 10 ms $\times$ 100 $\times$ 100 = 100 s.

None of the prior art discloses a method for speeding up the detection of incident infrared light in a thermal infrared detector. Japanese Patent Laid-open No. 206733/90 describes a construction in which a Peltier element or heating element is disposed on a diaphragm, thereby allowing the diaphragm temperature to be maintained at a uniform level, but does not disclose a method for high-speed detection.

SUMMARY OF THE INVENTION:

It is an object of the present invention to provide a thermal functional device capable of faster thermal response speed, an energy detector that uses such a device, and a method of driving a thermal functional device.

According to one embodiment of the present invention, the thermal functional device includes: a flexible diaphragm, a thermoelectric element that converts heat to an electrical signal, an electrothermic element that converts an electric signal to heat, and a reference signal generating means. The thermoelectric element is disposed on the diaphragm, and the electrothermic element is disposed on the diaphragm adjacent to the thermoelectric element. The reference signal generating means supplies a reference signal that is compared with the output signal of the thermoelectric element for controlling driving of the electrothermic element. A comparing means is further provided that compares the reference signal from the reference signal generating means and the output signal of the thermoelectric element, and that drives the electrothermic element by supplying a compensating signal to the electrothermic element that compensates for the difference between the reference signal and the output signal of the thermoelectric element.

With this construction, the electrothermic element is controlled so as to offset the energy that is detected by the thermoelectric element more rapidly than the thermal response of the diaphragm, thereby eliminating temperature changes in the diaphragm. Free of the influence of the thermal time constant of the diaphragm, the response speed with respect to incident infrared light can be greatly improved, and the linearity of the thermoelectric conversion can be improved. Furthermore, since temperature changes do not occur in the diaphragm, it is difficult for other detectors, for example, night vision devices or guiding devices for military applications, to detect this thermal functional device.

A construction in which the diaphragm is disposed over a cavity provided in the substrate and the comparing means is disposed in the substrate is also possible. In such a case, the construction of the thermal functional device is simple and readily amenable to miniaturization.

The thermal functional device may also be a construction having a mirror means that guides electromagnetic waves originating from the outside toward the thermoelectric element, thereby realizing a thermal functional device that is both extremely inexpensive, compact, and capable of fast response.

A construction is also possible in which the reference signal generating means is a constant-voltage source, and in which the thermal function device further includes: a reference thermoelectric element, additional electrothermic element disposed in the vicinity of the reference thermoelectric element, and additional comparing means that outputs the difference between the output signal of the reference thermoelectric element and the reference voltage as a compared signal; and further includes a detecting means that detects the incidence of energy to the thermoelectric element based on the difference between the compensating signal and the compared signal. The incidence of energy such as the incidence of infrared light can thus be detected with greater accuracy.

In the energy detector of the present invention, a plurality of the thermoelectric elements of the thermal functional device of any of the above-described constructions are arranged in a line. An energy detector that is constituted by a single thermal functional device does not exhibit variations in the sensitivity of pixels and does not generate drift. In contrast, a construction employing a plurality of thermal functional devices arranged in a line can narrow the noise frequency band and can reduce noise.

The method of driving the thermal functional device of this invention includes steps of: comparing the output of a thermoelectric element disposed on a diaphragm with a reference signal that is supplied from a reference signal generating means; and supplying, to an electrothermic element that is disposed on the diaphragm adjacent to the thermoelectric element, a compensating signal that compensates for the difference between the two signals based on the comparison result, and driving the electrothermic element.

By means of this method, temperature changes do not occur in the diaphragm and the thermoelectric element can always be operated at the optimum temperature, and the thermal functional device can be driven with good accuracy.

The present invention can be widely applied to all thermal functional devices, including infrared detectors.

The above and other objects, features, and advantages of the present invention will become apparent from the following description with reference to the accompanying drawings which illustrate examples of the present invention.

BRIEF DESCRIPTION OF THE DRAWINGS

Fig. 1 is a sectional view of the principle parts of a thermal infrared detector of the prior art;
Fig. 2 is a circuit diagram of the thermal infrared detector shown in Fig. 1;
Fig. 3 is a perspective view of the principle parts of a thermal infrared detector according to the first embodiment of the present invention;
Fig. 4 is a sectional view of the principle parts of the thermal infrared detector shown in Fig. 3;
Fig. 5 is another sectional view of the principal parts of the thermal infrared detector shown in Fig. 3;
Fig. 6 is a circuit diagram of the thermal infrared detector shown in Fig. 3;
Fig. 7 is a flow chart showing the drive method of the thermal infrared detector shown in Fig. 3;
Fig. 8A is a graph showing the incident power of the thermal infrared detector shown in Fig. 3;
Fig. 8B is a graph showing the output signal of a thermoelectric element;
Fig. 8C is a graph showing the diaphragm temperature;
Fig. 9 is a circuit diagram of another thermal infrared detector;
Fig. 10 is a circuit diagram of yet another thermal infrared detector;
Fig. 11 is a flow chart showing the drive method of the thermal infrared detector shown in Fig. 10;
Fig. 12 is a schematic perspective view showing the entire thermal infrared detector according to the first embodiment of the present invention;

Fig. 13 is a schematic sectional view of the thermal infrared detector shown in Fig. 12;
Fig. 14 is a time chart showing the drive method of the thermal infrared detector shown in Fig. 12;
Figs. 15A-15D are views for explaining the operation of micromirrors;
Fig. 16 is a time chart showing the voltage pulses when driving the micromirrors shown in Figs. 15A-15D;
Fig. 17 is a schematic perspective view for explaining the method of arranging fixed mirrors according to the first embodiment of the present invention;
Fig. 18 is a schematic perspective view for explaining another method of arranging fixed mirrors;
Fig. 19 is a graph showing the relation between the Seebeck coefficient the impurity concentration;
Fig. 20 is an equivalent circuit diagram of a thermal infrared detector according to the first embodiment of the present invention;
Fig. 21 is a schematic sectional view of another thermal infrared detector;
Fig. 22 is a schematic sectional view of yet another thermal infrared detector;
Fig. 23 is a schematic sectional view of yet another thermal infrared detector;
Fig. 24 is a schematic sectional view of yet another thermal infrared detector;
Fig. 25 is a schematic perspective view showing the entire thermal infrared detector according to the second embodiment of the present invention;
Fig. 26 is a schematic sectional view of the thermal infrared detector shown in Fig. 25;
Fig. 27 is a circuit diagram of the thermal infrared detector shown in Fig. 25; and
Fig. 28 is a circuit diagram of a modification of the second embodiment of the present invention.

DETAILED DESCRIPTION OF THE PREFERRED EMBODIMENTS

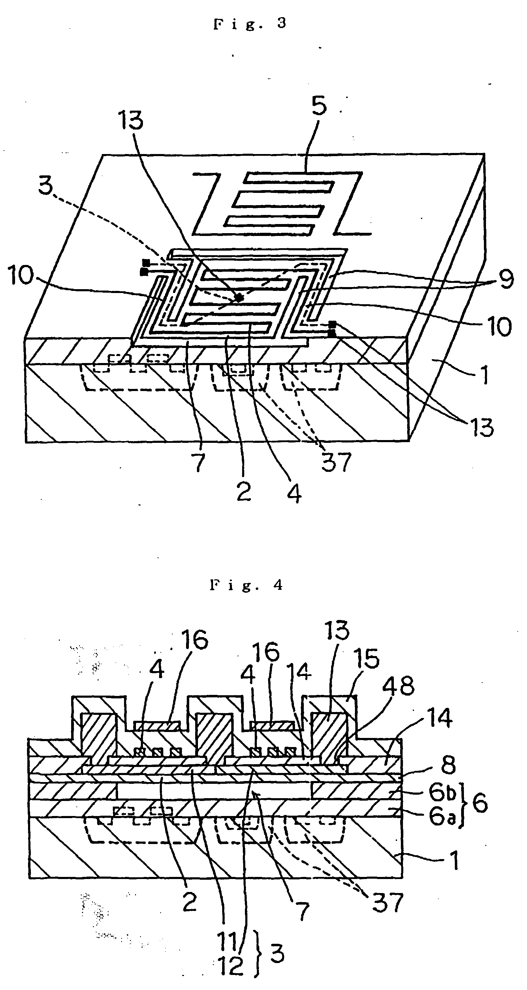

Referring now to Fig. 3, the thermal functional device according to the first embodiment of the present is shown, this being a thermal infrared detector comprising substrate 1, diaphragm 2, electrothermic element 3; thermoelectric element 4, and reference thermoelectric element 5. Control circuit 37, which is to be described hereinbelow, is configured in substrate 1. Insulating layer 6 is formed on substrate 1. Cavity 7 is formed in this insulating layer 6 by etching, and insulating layer 8 is further formed over this cavity 7. The portion of this insulating layer 8 that is located over cavity 7 is diaphragm 2. Slit 9 is formed in insulating layer 8, and diaphragm 2 is supported by beam 10, which is a slender, bent member.

Electrothermic element 3, which converts electrical signals to heat, is mounted on this diaphragm 2. As electrothermic element 3, a Peltier element is used that is constituted by connecting *p*-type semiconductor 11 and *n*-type semiconductor 12, and providing contact 13. Thermoelectric element 4, which converts heat to electrical signals, is also mounted on diaphragm 2. Thermoelectric element 4 of this embodiment is a bolometer and is arranged either in close proximity to or partially overlapping electrothermic element 3. Nevertheless, insulating layer 14 is present between the two elements to prevent direct contact between electrothermic element 3 and thermoelectric element 4.

In addition, silicon oxide layer 15 having a refractive index of n and a thickness of λ/4n is formed on diaphragm 2, and metal thin film 16 is formed over this silicon oxide layer 15 so as to cover at least thermoelectric element 4. The portion of diaphragm 2 in which metal thin film 16 is formed thus acts as an infrared absorbing layer. Upon incidence of infrared light of wavelength λ, standing waves occur in silicon oxide layer 15 and the infrared light is absorbed in metal thin film 16. If the sheet resistance of metal thin film 16 is set such that the impedance when in a vacuum is 377 Ω/□ (resistance per unit area), an absorptance of nearly 100% can be obtained.

Diaphragm 2 can thus efficiently absorb incident infrared light over a wide photoreceptive area, and in addition, is formed to have low heat conductance to prevent the escape of heat by long beam 10.

Reference thermoelectric element 5, which is a reference signal generating means, is disposed on substrate 1 at a position outside diaphragm 2. This reference thermoelectric element 5 is also a bolometer, similar to thermoelectric element 4.

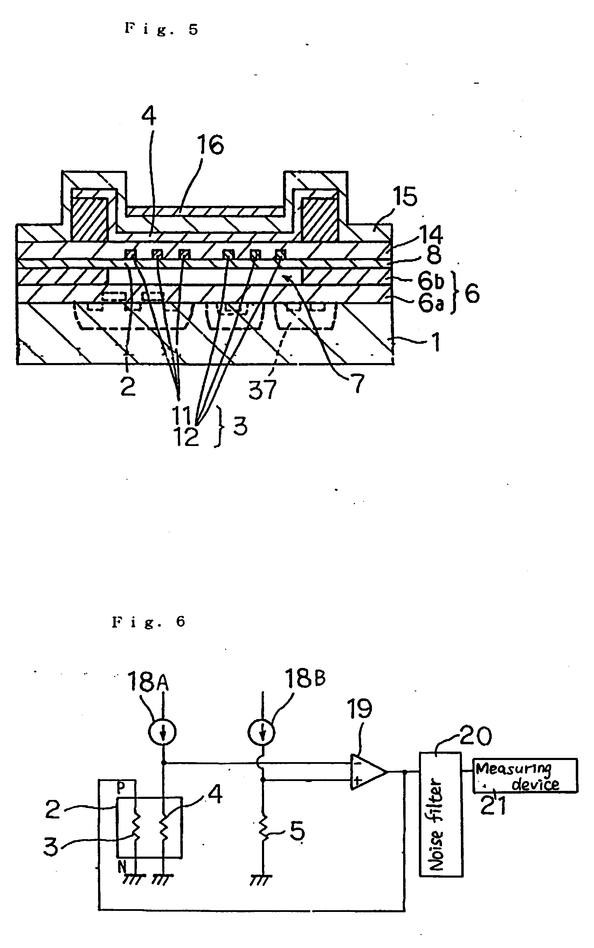

Control circuit 37, which connects thermoelectric element 4, electrothermic element 3, and reference thermoelectric element 5, is then constructed in substrate 1. This control circuit 37 is constituted by operational amplifier 19, noise filter 20, and measuring device 21, as shown in Fig. 6. Constant-current source 18A and thermoelectric element 4 are connected to one input terminal of operational amplifier 19, and constant-current source 18B and reference thermoelectric element 5 are connected to the other input terminal. The output of operational amplifier 19 is connected both to measurement device (detection means) 21 by way of noise filter 20 and to electrothermic element 3. Thermoelectric element 4 is supplied with a fixed current from constant-current sources 18A and 18B, and converts change in resistance to change in voltage. In this embodiment, a bolometer composed of titanium having a positive temperature coefficient of electric resistance is used as thermoelectric element 4. In such a case, *p*-type semiconductor 11 of electrothermic element (Peltier element) 3 is connected to the output of operational amplifier 19, and thermoelectric element 4 is connected to the inverse input terminal of operational amplifier 19, thereby enabling control for keeping diaphragm 2 at a fixed temperature, as will be described hereinbelow. Alternatively, *n*-type semiconductor 12 of electrothermic element 3 is connected to the output of operational amplifier 19 and thermoelectric element 4 is connected to the non-inverse input terminal of operational amplifier 19. However, when using thermoelectric element 4 that has a negative temperature coefficient of electric resistance, such as a polysilicon bolometer or a metal oxide semiconductor bolometer, *n*-type semiconductor 12 of electrothermic element 3 is connected to the output of operational amplifier 19 and thermoelectric element 4 is connected to the inverse input terminal of operational amplifier 19. Alternatively, *p*-type semiconductor 11 of electrothermic element 3 is connected to the output of operational amplifier 19 and thermoelectric element 4 is connected to the non-inverse input terminal of operational amplifier 19. Finally, measuring device 21 may be, for example, a signal processing circuit such as an amplifier on the same chip, or may be the first-stage amplifier or signal processing circuit of a camera circuit that is outside the chip.

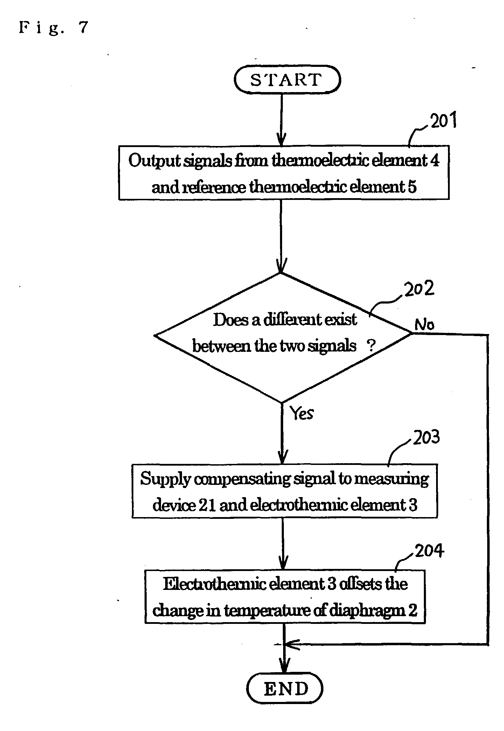

Turning now to Fig. 7, explanation is next presented regarding the infrared detecting operation of this thermal infrared detector.

In Step 201, when infrared rays are radiated toward diaphragm 2 and infrared rays are absorbed by metal thin film 16, the energy that is to generate heat is conferred to metal thin film 16, and thermoelectric element 4 senses this energy and increases output. In contrast, reference thermoelectric element 5 is located in the substrate outside diaphragm 2 and thus does not receive irradiation by the infrared light and experiences no increase in thermal energy. The output signal (reference signal) of reference thermoelectric element 5 thus does not change. In operational amplifier 19, the outputs of thermoelectric element 4 and reference thermoelectric element 5 are compared in Step 202 and the difference between the outputs is detected. In Step 203, this difference is amplified and outputted as a compensating signal. After noise is cut by noise filter 20, the compensating signal is supplied to measuring device 21. Measuring device 21 finds the amount of generated thermal energy that is added to diaphragm 2 from this compensating signal, and calculates the amount of infrared radiation based on this amount of generated thermal energy.

The compensating signal is further supplied to electrothermic element 3 and thus drives this element. Electrothermic element 3 of this embodiment is a Peltier element, and produces a cooling effect when supplied with the compensating signal in Step 204. The compensating signal acts to cancel the difference between the output of thermoelectric element 4 that is irradiated by infrared light and the output of reference thermoelectric element 5 that does not receive infrared radiation. In other words, when supplied with the compensating signal, electrothermic element 3 acts to maintain a temperature equal to a state of no irradiation by infrared light and cancels the thermal energy applied to diaphragm 2 by the infrared radiation.

Compensating signals subsequently continue to be outputted from operational amplifier 19 as described hereinabove as long as irradiation by infrared light continues, and measuring device 21 continues to find the amount of infrared irradiation and continues to drive electrothermic element 3 to maintain diaphragm 2 at a fixed temperature. Thus, even though thermal energy is added to diaphragm 2 due to irradiation by infrared light, electrothermic element 3 offsets this thermal energy before the temperature of the diaphragm actually increases, and diaphragm 2 can be maintained at a fixed temperature.

In the prior art, the temperature of the diaphragm continued to increase with the incidence of infrared light and the danger existed that this increase in temperature would influence the operation of the thermoelectric element. In the present embodiment, however, diaphragm 2 can be maintained at a fixed temperature despite irradiation by infrared light, thereby allowing thermoelectric element 4 to be used at the optimum temperature and allowing maximum utilization of the element's properties.

When the amount of this radiation increases during irradiation by infrared light, the output of thermoelectric element 4 increases and the difference between this output and the output of reference thermoelectric element 5 also increases, thereby bringing about an increase in the compensating signal. Electrothermic element 3 is accordingly driven to produce an even greater cooling effect, and diaphragm 2 is thus maintained at a constant temperature. Conversely, if the amount of irradiation by infrared light should decrease, the output of thermoelectric element 4 decreases, the difference between this output and the output of reference thermoelectric element 5 decreases, and the compensating signal also falls. Electrothermic element 3 is accordingly driven to generate heat, thereby maintaining diaphragm 2 at a fixed temperature. If irradiation by infrared light should stop, the output of thermoelectric element 4 drops to the same level as the output of reference thermoelectric element 5. Operational amplifier 19 accordingly senses that the two outputs are equal and stops output of the compensating signal. Measuring device 21 stops receiving the supply of compensating signals and thus senses that infrared radiation has stopped. Finally, electrothermic element 3 is no longer driven by the compensating signal and therefore stops operation.

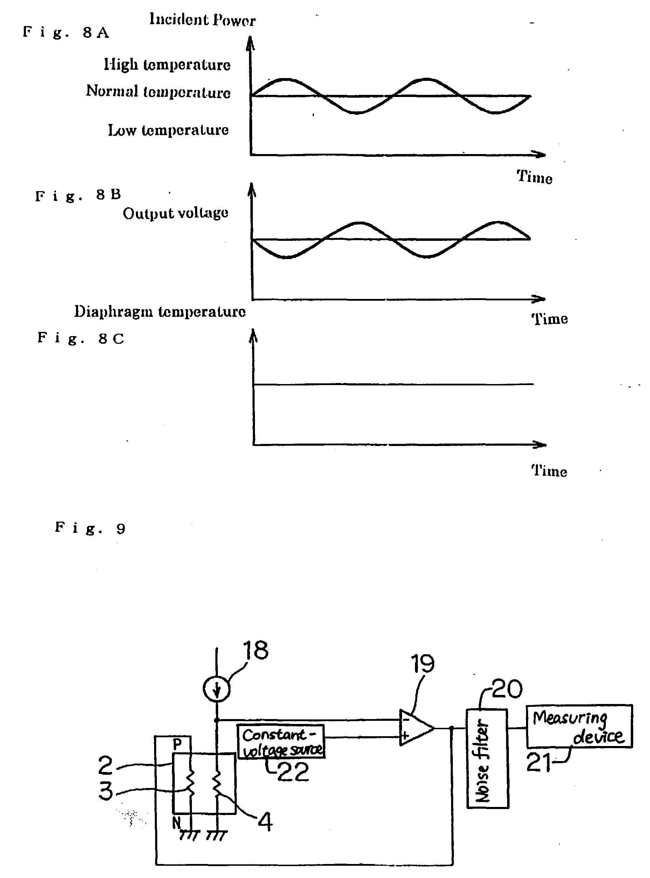

Fig. 8 shows the relation between the temperature of diaphragm 2 and the output voltage of thermoelectric element 4 that corresponds to incident infrared light. Fig. 8A shows the change over time in the amount of irradiation by incident infrared light (incident power). In other words, Fig. 8A indicates the incident power of infrared rays that are radiated from the imaged object when obtaining an image in an imaging device from an object that increases and decreases in temperature with normal temperature as the norm. Fig. 8B indicates the output voltage of operational amplifier 19 that corresponds with the infrared radiation shown in Fig. 8A. The output voltage of this operational amplifier 19 is the compensating signal that is supplied to measuring device 21 and further supplied to electrothermic element 3 in order to drive electrothermic element 3. During the time the imaged object is at a higher temperature, the output voltage of thermoelectric element 4 changes so as to generate a compensating signal that causes electrothermic element 3 to become endothermic. In contrast, during the time the imaged object is at a lower temperature, the output voltage of thermoelectric element 4 changes so as to generate a compensating signal that causes electrothermic element 3 to become exothermic. Compensating signals are thus generated through calculation and amplification by operational amplifier 19 such that diaphragm 2 is always at a fixed temperature, and diaphragm 2 is maintained at a fixed temperature as shown in Fig. 8C. In order to employ thermoelectric element 4 at the optimum temperature as described in the foregoing explanation, this thermal infrared detector is preferable used in a thermostatic chamber controlled-temperature room. In a case of use outside a thermostatic chamber, however, the temperature of diaphragm 2 may rise for reasons other than irradiation by infrared light, i.e., increases in ambient temperature. In such cases, the output of thermoelectric element 4 increases at the same time that the output of reference thermoelectric element 5 similarly increases, the two outputs are detected as equal in operational amplifier 19, and a compensating signal is not transmitted. Measuring device 21 accordingly senses that there is no irradiation of infrared light.

Output of the compensating signal that was calculated in operational amplifier 19 without alteration produces large band width noise, and the noise frequency bandwidth is therefore preferably narrowed by use of noise filter 20, such as a low-pass filter. To read the signal of each pixel, moreover, the cut-off frequency of noise filter 20 is preferably a multiple of the pixel clock frequency, for example, 2-10 times the clock frequency. If the number of pixels is 64 $\times$64 and the frame frequency is 30 Hz, the pixel clock frequency is 123 kHz and the cut-off frequency is thus preferably 250 kHz-600 kHz. Alternatively, the frequency bandwidth of operational amplifier 19 itself may be limited and noise filter 20 omitted.

As described hereinabove, an infrared absorbing layer is constituted by: thermoelectric element 4, which acts as a reflective layer; silicon oxide layer 15 having a refractive index of n; and metal thin film 16 formed on diaphragm 2. Metal thin film 16 is preferably composed of titanium or a titanium nitride. Thermoelectric element 4 of this embodiment is formed in a winding shape to optimize the resistance value, but the presence of non-formed portions with respect to the infrared wavelength can be ignored, and this thermoelectric element 4 functions as a reflecting layer.

Further, although not shown in the figures, a reflecting layer can be formed in the bottom of cavity 7 and cavity 7 can be used as a layer having a refractive index of n. In this case, electrothermic element 3 and thermoelectric element 4 on diaphragm 2 are preferably constituted so as to allow as much transmission of infrared rays as possible.

Materials that can be used as metal thin film 16 of the conventionally used infrared absorbing layer include a nickel-chrome film and gold-black, which is formed by evaporating gold in a low-level vacuum.

Thermoelectric element 4 may employ: a bolometer, which takes advantage of the dependence of resistance on temperature; a thermocouple (thermopile), which takes advantage of the thermoelectromotive force between two types of materials; an element that takes advantage of the dependence on temperature of a *pn* junction diode current; or a pyroelectric material, which takes advantage of the dependence on temperature of spontaneous polarization. Bolometers, thermocouples, and *pn* junction diodes have the advantage of allowing monolithic deposition of materials.

A bolometer features a capacity for high sensitivity. A material having a high temperature coefficient of electrical resistance (TCR) and low 1/f noise is preferable as the material for a bolometer. Vanadium oxide, titanium oxide, and materials in which impurities are added to these compounds have a TCR on the order of 2%/K and low 1/f noise, and these materials are therefore suitable for use. Alternatively, titanium, polysilicon, amorphous silicon, and silicon-germanium, which feature a TCR on the order of 0.2%/K - 2%/K and which can be easily formed by known silicon processes, are also suitable for use. Among metals, titanium has a high TCR on the order of 0.2-0.5%/K. Among metals, titanium has a low heat conductance of about 0.1 W/cm and can reduce the heat conductance of the diaphragm. Further, although a feature of metals in general, titanium also has a large number of carriers and therefore has extremely low 1/f noise. On the other hand, a bolometer that employs polysilicon can be formed simultaneously with the Peltier element (electrothermic element 3) to be explained hereinbelow, which also employs polysilicon, and therefore has the advantage of simplifying the fabrication process.

A thermocouple having one contact formed on diaphragm 2 and the other contact formed on substrate 1 outside diaphragm 2 can catch changes in energy on diaphragm 2. A thermocouple can find the difference in temperature of diaphragm 2 using the substrate temperature as a reference, the thermocouple thereby performing the function of, for example, reference thermoelectric element 5, and enabling a construction in which reference thermoelectric element 5 is omitted. A material having a high Seebeck coefficient is preferable as the material of the thermocouple. Polysilicon or amorphous silicon doped with impurities such as boron, phosphorus, and arsenic has a high Seebeck coefficient of about 0.5 mV/K and can easily be produced on a semiconductor fabrication line. *P*-type polysilicon doped with boron and *n*-type polysilicon doped with phosphorus or arsenic have Seebeck coefficients of mutually differing polarity, and a large thermoelectromotive force can be obtained by using these as the two materials of the thermocouple. The contact of the two materials is formed from a material such as aluminum, and since the thermocouple has the same structure as Peltier element (electrothermic element) 3 to be explained, both can be formed at the same time. The thermocouple is an element which causes a change in electromotive force according to a change in temperature. When impedance of the circuit connected to the thermocouple is high, no electric current flows into the thermocouple and electric power generated in the thermocouple is approximately zero. Therefore, the thermocouple has an advantage not to cause generation of heat on a diaphragm.

A *pn* junction diode is made up of, for example, a *p*-type polysilicon and an *n*-type polysilicon, and thermoelectric element 4 can be constituted by using the temperature dependency of current in the forward direction or in the reverse direction. Alternatively, thermoelectric element 4 can be constituted using a Schottky diode constituted by a metal and a semiconductor instead of a *pn* junction diode, and then using the temperature dependency of the forward-direction or reverse-direction current.

In this embodiment, a Peltier element is used as electrothermic element 3. Peltier element 3 has the same construction as a thermocouple, and, as shown in Fig. 4, includes *p*-type semiconductor 11, *n*-type semiconductor 12, and contact 13 made from aluminum. This Peltier element generates heat when current flows from *p*-type semiconductor 11 toward *n*-type semiconductor 12, and absorbs heat when current flows in the reverse direction. Alloys such as bismuth telluride ($Bi_2Te_3$) or antimony telluride ($Sb_2Te_3$) and amorphous silicon or polysilicon doped with boron, phosphorus, or arsenic can be used as the materials of the Peltier element.

Electrothermic element 3 may employ another component other than a Peltier element. As described hereinabove, it is preferable to use electrothermic element 3 that can both generate and absorb heat so as to act to absorb heat when the imaged object has a high temperature and generate heat when the imaged object has a low temperature.

If the Peltier coefficient is $\Pi$ and the current flowing is I, the amount W of heat generated or absorbed per unit time in Peltier element 3 can be represented by equation (1):

$$W = \Pi I \qquad (1)$$

If the absolute temperature is T, the Peltier coefficient $\Pi$ and Seebeck coefficient $\alpha$ can be repre-

sented by equation (2):

$$\Pi = \alpha T \qquad (2)$$

As described hereinabove, Peltier element 3 in which *p*-type polysilicon 11 and *n*-type polysilicon 12 are combined can make the Seebeck coefficient $\alpha$ on the order of: 1 mV/K (= 0.5 mV/K × 2), in which case, the Peltier coefficient $\Pi$ is about 300 mJ/C. If the amount of energy change on diaphragm 2 is ÄW and the heat conductance is Gth, the amount of temperature change ÄT of diaphragm 2 is shown by equation (3):

$$\Delta T = \frac{\Delta W}{G_{th}} \qquad (3)$$

It is normally feasible to make heat conductance Gth on the order of 0.01 μW/K. Based on equations (1) and (3), a current of approximately ±0.33 μA should be caused to flow through Peltier element 3 in such a case if the temperature of the diaphragm is to vary up and down by, for example, ±10°C.

The change in output voltage is next found for a case in which the temperature of the imaged object changes by 1°C.

A change in temperature of 1°C in the imaged object results in an amount of heat of incident infrared light per pixel of ÄP[W]. This amount of heat ÄP is approximately $6 \times 10^{-10}$ [W], and according to equation (1), the current ÄI that flows through Peltier element 3 is ÄI = ÄP/$\Pi$ = 2nA . If the resistance of Peltier element 3 is R, the output voltage Äv can be represented by equation (4). For example, if R=500 kΩ, Äv = 1 mV.

$$\Delta v = R \frac{\Delta P}{\Pi} \qquad (4)$$

Johnson noise is present in Peltier element 3, and the noise voltage vn shown by equation (5) is therefore contained in the output voltage. Äf is the frequency band of the above-described noise filter 20, and may be, for example, 250 kHz. In such a case, vn is equal to 45 μ V if R is 500 kΩ.

$$V_n = \sqrt{4kTR\Delta f} \qquad (5)$$

One index of the performance of an infrared detector is the Noise Equivalent Temperature Difference (NETD). This index compares output noise with signal and indicates the temperature difference of the imaged object when both coincide, and is equivalent to the temperature resolution. NETD$_{PJ}$, which arises from the Johnson noise of Peltier element 3, is the ratio of the noise voltage (noise) indicated by equation (5) and the output voltage (signal) of equation (4), and is expressed by equation (6).

$$NETD_{PJ} = \frac{\Pi}{\Delta P} \sqrt{\frac{4kT\Delta f}{R}} \qquad (6)$$

A normal infrared detector can be applied to various uses if the NETD is 0.2°C or less. If each of the numbers taken as examples up to this point are substituted into equation (6), NETD$_{PJ}$ arising from the Johnson noise of Peltier element 3 is approximately 45m°C, indicating that the element is suitable for practical use.

The above-described calculations relate to the Johnson noise of Peltier element 3, but design of an element must be carried out while giving due consideration to such factors as the 1/f noise of Peltier element 3, the Johnson noise and 1/f noise of a thermoelectric element, and the temperature fluctuation of diaphragm 2 so as to minimize these values.

The 1/f noise can be sufficiently reduced by reducing the resistance of contact 13 or by taking care in selecting materials and regulating the deposition conditions.

Fluctuation in the temperature of diaphragm 2 is based on the fluctuation in heat conduction, and this influence can be reduced by reducing heat conductance to reduce Äf. NETD$_{TF}$, which arises from fluctuation in temperature, can be expressed by equation (7).

$$NETD_{TF} = \frac{\sqrt{4kT^2 G_{th}\Delta f}}{\Delta P} \qquad (7)$$

When the value Gth = 0.01 μW/K is substituted, NETD$_{TF}$ resulting from temperature fluctuation becomes 0.18°C.

The total NETD is expressed by the sum of the squares of each NETD component. In this example, the total NETD can be suppressed to approximately 185m°C, and this infrared detector therefore exhibits sufficiently high performance.

In the constructions shown in Figs. 3-6, diaphragm 2 is maintained at normal temperature, but some materials are preferably kept at a temperature other than normal temperature in accordance with thermoelectric element 4. For example, the TCR of YBA$_2$Cu$_3$O$_7$, which is a superconductor, increases in the vicinity of the temperature of liquid nitrogen (77 K). This type of material is preferably used at this low temperature. In addition, barium titanate, which is a ferroelectric material, has a transition temperature to a paraelectric in a high temperature range close to 130°C. This type of material has a high TCR when used at high temperatures in this range.

Fig. 9 shows a construction that facilitates setting of the temperature of the diaphragm to a temperature other than the normal temperature. If compared to the construction shown in Fig. 6, it can be seen that the reference signal generating means has a different structure. Parts that are equivalent to the construction shown in Fig. 6 are identified by the same reference numbers and explanation is here omitted. In this construction, constant-voltage source 22 is provided in place of reference thermoelectric element 5. In an infrared detector that is placed in a thermostatic chamber, for example, the reference voltage (reference signal) that should be supplied to electrothermic element 3 to maintain diaphragm 2 at a desired temperature is investigated beforehand, and this constant-voltage source 22 supplies this reference voltage to operational amplifier 19. In this way, diaphragm 2 can be maintained at the desired temperature without using a reference electrothermic element. In addition, constant-voltage source 22 need not be a special electrical component if it is always kept at a fixed potential.

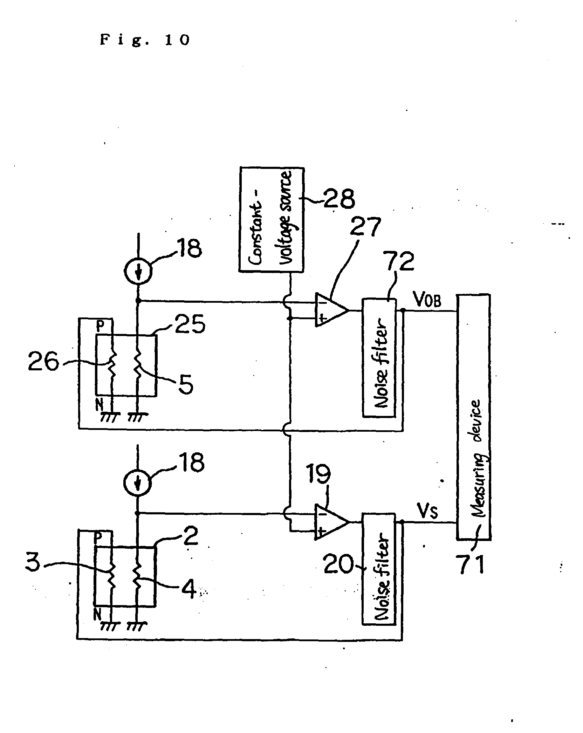

Fig. 10 shows a construction that facilitates setting the temperature of diaphragm 2 to a temperature other than normal temperature with greater accuracy. Parts that are equivalent to the construction shown in Fig. 6 are given the same reference numbers and explanation is here omitted. In this construction, diaphragm 2 and additional diaphragm 25 are provided, reference thermoelectric element (for example, a bolometer) 5 and additional electrothermic element (for example, a Peltier element) 26 being disposed on this diaphragm 25. In addition, additional operational amplifier 27, constant-voltage source (reference signal generating means) 28, and noise filter 72 are also provided.

In this control circuit, thermoelectric element 4 is connected to constant-current source 18 and to the inverse input terminal of operational amplifier 19, and constant-voltage source 28 is connected to the non-inverse input terminal of operational amplifier 19. The output of operational amplifier 19 is connected by way of noise filter 20 to both measuring device 71 and electrothermic element 3. Reference thermoelectric element 5 is connected to constant-current source 18 and to the inverse input terminal of additional operational amplifier 27. The non-inverse input terminal of additional operational amplifier 27 is connected to constant voltage source 28. Finally, the output of additional operational amplifier 27 is connected by way of noise filter 72 to both measuring device 71 and to additional electrothermic element 26. Accordingly, operational amplifier 19 outputs the difference (signal voltage $V_s$) between the output voltage of thermoelectric element 4 and the reference voltage (reference signal) supplied from constant-voltage source 28 to measuring device 71. Additional operational amplifier 27 outputs the difference (OB signal $V_{OB}$) between the output voltage of reference thermoelectric element 5 and the reference voltage (reference signal) supplied from constant-voltage source 28 to measuring device 71. Measuring device 71 compares signal voltage $V_s$ and OB voltage $V_{OB}$, and determines that energy has been applied to diaphragm 2 if there is a difference. A detailed explanation regarding the elements that are essentially the same as the control circuit shown in Fig. 6 is here omitted.

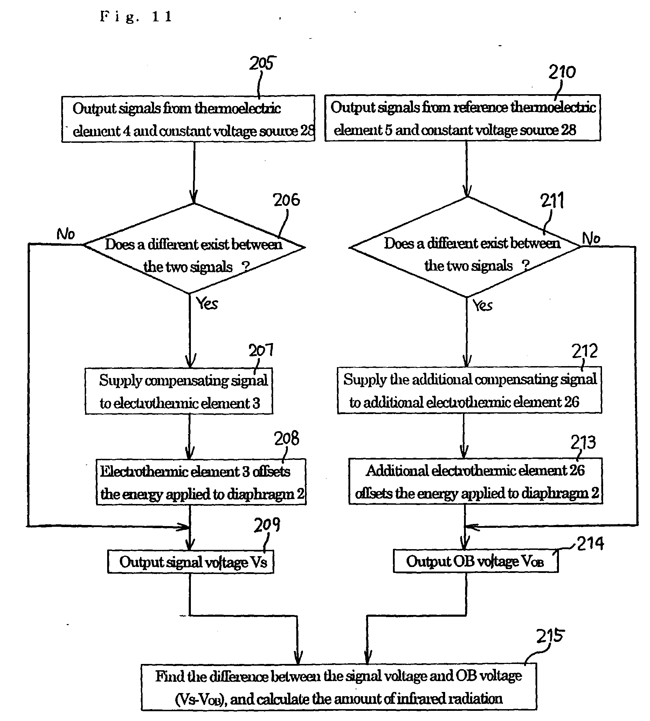

Turning now to Fig. 11, explanation is presented regarding the infrared detector operation under the control of this control circuit.

In Step 205, when infrared light is radiated toward diaphragm 2 and infrared rays are absorbed by metal thin film 16, thermal energy is added to metal thin film 16. Thermoelectric element 4 on diaphragm 2 senses this energy and increases output. In addition, a reference voltage (reference signal) is outputted from constant-voltage source 28. In Step 206, operational amplifier 19 compares the output of thermoelectric element 4 and the reference voltage. In Step 207, a difference is detected, and this difference is amplified and outputted as a compensating signal. The compensating signal (signal voltage $V_s$) is supplied to electrothermic element 3 and drives this element. In Step 208, electrothermic element 3 operates to offset the difference between the output of thermoelectric element 4 which was irradiated by infrared light and the reference voltage, which is the compensating signal. In other words, electrothermic element 3 offsets the thermal energy that was added to diaphragm 2 by the irradiation of infrared light and acts to maintain a temperature that is the same as a state before irradiation of infrared light. In Step 209, the noise of this compensating signal (signal voltage $V_s$) is cut by noise filter 20, following which the signal is supplied to measuring device 71.

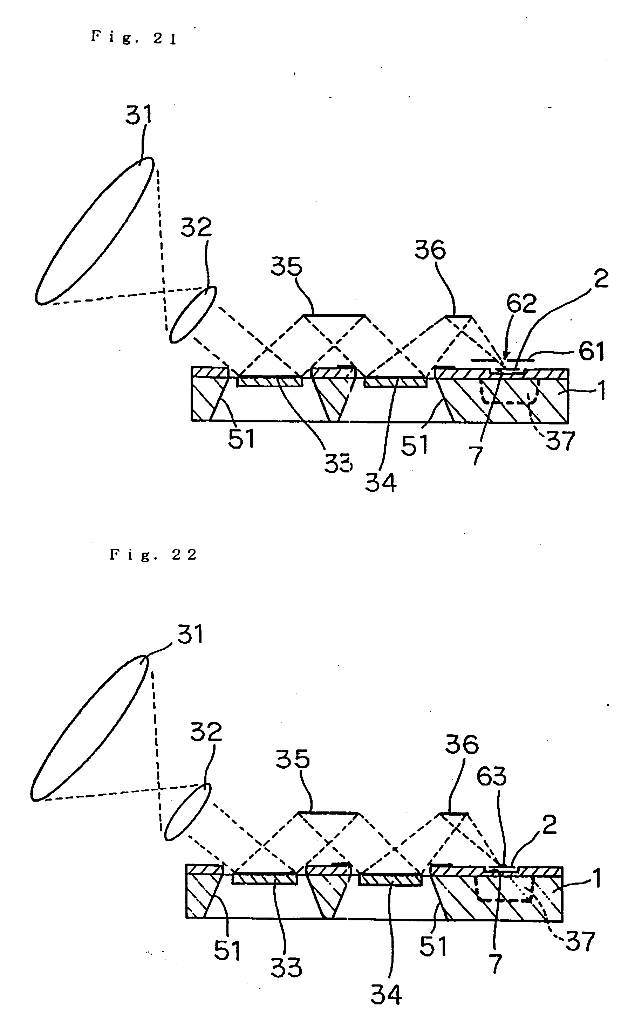

Reference thermoelectric element 5 on additional diaphragm 25 is covered by a shielding member such as light shield 61 shown in Fig. 21 and therefore does not receive infrared radiation. However, there are cases in which the output of reference thermoelectric element 5 fluctuates due to fluctuation in the ambient temperature. A reference voltage (reference signal) is outputted from constant-voltage source 28 in Step 210. In Step 211, the output of reference thermoelectric element 5 and the reference voltage (reference signal) are compared at operational amplifier 27. When a difference is detected between the two outputs, this difference is amplified and outputted as another compensating signal (compared signal $V_{OB}$) in Step 212. This other compensating signal is supplied to additional electrothermic element 26 and drives this element. In Step 213, additional electrothermic element 26 operates to offset the difference between the output of reference thermoelectric element 5 and the reference voltage, which is the additional compensating signal. In other words, additional electrothermic element 26 acts to offset thermal energy that is added to diaphragm 25 due to changes in the environment and operates so as to maintain the prescribed temperature. In Step 214, noise is cut from the additional compensating signal (OB voltage $V_{OB}$) by means of noise filter 72, following which the signal is supplied to measuring device 71.

Measuring device 71 is thus supplied with signal voltage $V_s$ from operational amplifier 19 and OB voltage $V_{OB}$ from operational amplifier 27. In Step 215, measuring device 71 finds the difference between the signal voltage and the OB voltage ($V_s$ - $V_{OB}$). Measuring device 71 finds the amount of thermal energy added to diaphragm 2 based on this difference between the signal voltage and the OB voltage ($V_s$ - $V_{OB}$) and calculates the amount of infrared radiation based on the amount of thermal energy.

According to this construction, additional electrothermic element 26 operates to maintain the temperature of diaphragm 25 at a fixed temperature that is established by constant-voltage source 28. Diaphragm 2, which is provided with thermoelectric element 4 that actually performs detection of infrared radiation, is similarly maintained by electrothermic element 3 at a temperature that is determined by constant-voltage source 28. The infrared detector thus always operates optimally even when not placed in a thermostatic chamber by setting the voltage of constant-voltage source 28 so as to maintain the temperature that allows optimum operation of thermoelectric element 4.

Supposing a case in which there is no incidence of energy such as infrared radiation, signal voltage $V_s$ and OB voltage $V_{OB}$ will fluctuate in the same way and the difference between the two voltages ($V_s$ - $V_{OB}$) remains 0 even if a change should occur in ambient temperature, and it is therefore determined that there is no infrared irradiation. If the ambient temperature changes, and further, if diaphragm 2 is irradiated by infrared light, OB voltage $V_{OB}$ fluctuates with the change in ambient temperature. In addition to the fluctuation that accompanies the change in ambient temperature, signal voltage $V_s$ also fluctuates with the application of thermal energy caused by the infrared radiation, and signal voltage $V_s$ therefore diverges from OB voltage $V_{OB}$. The difference between the two voltages ($V_s$ - $V_{OB}$) thus indicates a fluctuation in the output of thermoelectric element 4 that is due only to infrared radiation. Since the differences between the outputs of thermoelectric elements 4 and 5 and the reference voltage are found in operational amplifiers 19 and 27, the amount of infrared radiation can be accurately measured.

In the construction shown in Fig. 10, the temperature of diaphragm 2 can be set to 77 K or to 150°C. When the temperature is set extremely low and extremely high in this way, the temperature dependency of the Peltier coefficient $\Pi$ becomes a problem. The temperature dependency of the Peltier coefficient is represented by equation (8).

$$\Pi = \frac{\varepsilon_C - \varepsilon_F}{e} + \frac{3}{2} \frac{kT}{e} \qquad (8)$$

Here, $\varepsilon C$ represents the energy at the bottom of the conduction band, $\varepsilon F$ represents the Fermi level, k represents Boltzmann's constant, and e represents the unit charge. From equation (8), it can be seen that Peltier coefficient $\Pi$ increases monotonically with respect to absolute temperature.

Since Peltier coefficient $\Pi$ is high at normal temperature as described above, its drop to half this level in the vicinity of 77 K presents no particular problem. At high temperatures, the Peltier coefficient increases above its level at normal temperature, but in the case of polysilicon, the Peltier coefficient enters the intrinsic range at temperatures above 200°C and therefore drops precipitously. Polysilicon must therefore be used at temperatures below 200°C (Inuishi Yoshio, et. al. *"Semiconductor Properties 1"* Asakura Shoten. p. 223). According to the construction shown in Fig. 10, the temperature of diaphragm 2 automatically converges on the set temperature in cases of both high and low temperatures, and complicated setting is not required.

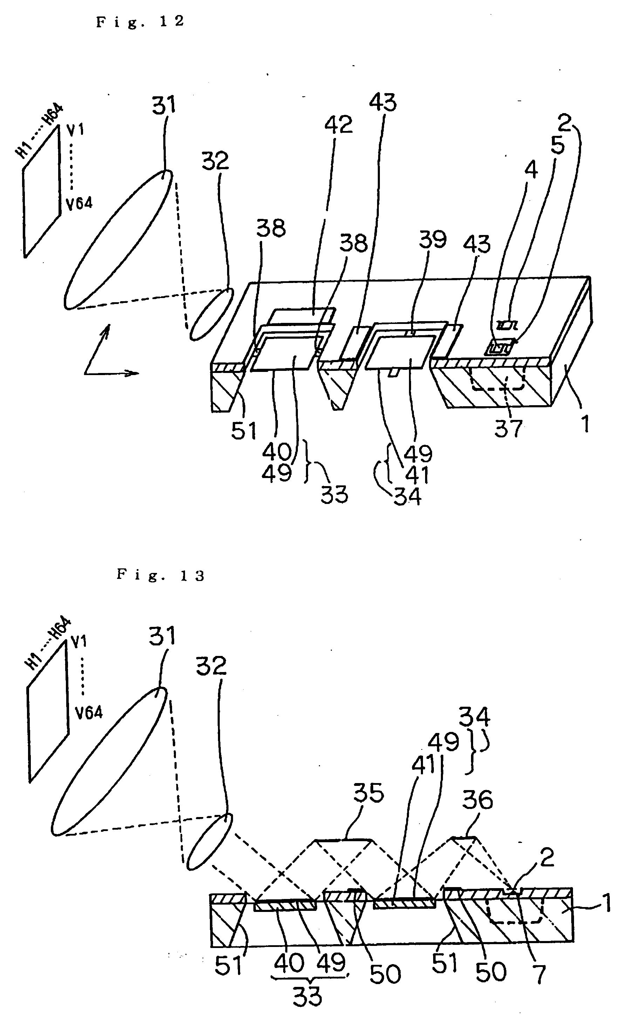

An actual example of an infrared detector that includes the circuit configuration described in the foregoing explanation is shown in Fig. 12 and Fig. 13. This device is a thermal infrared imaging device, and includes: objective 31 for condensing incident light, collimator lens 32 for converting the condensed light to parallel light rays, micromirrors (movable mirrors) 33 and 34 for scanning incident light in the x-direction (horizontal direction) and the y-direction (vertical direction), fixed mirrors 35 and 36 for returning the light that is reflected by micromirrors 33 and 34 back to the substrate, and the above-described thermoelectric element 4 and reference thermoelectric element 5. Circuits 37 including the above-described control circuit and micromirror drive circuit are formed in substrate 1.

Micromirrors 33 and 34 are formed on diaphragms 40 and 41, which are supported by beams 38 and 39. Beams 38 and 39 are connected to substrate 1 and are formed between the center of one side to the center of the opposite side of each of micromirrors 33 and 34. The direction of beam 38 of micromirror 33 is rotated 90° with respect to the direction of beam 39 of micromirror 34. The length, width, and thickness of beam 38 are set such that micromirror 33 has a resonance point in the vertical synchronizing frequency. The length, width, and thickness of beam 39 are similarly set such that micromirror 34 has a resonance point in the horizontal synchronizing frequency. Electrodes 42 and 43 are formed diagonally above the two sides of micromirrors 33 and 34 that do not have beams such that micromirrors 33 and 34 move back and forth with beams 38 and 39 as axes. Although not shown in the figure, an electrode is also formed on the side opposite electrode 42 such that micromirror 33 is interposed. Vertical synchronizing frequency pulses are applied to electrodes 42, and horizontal synchronizing frequency pulses are applied to electrodes 43.

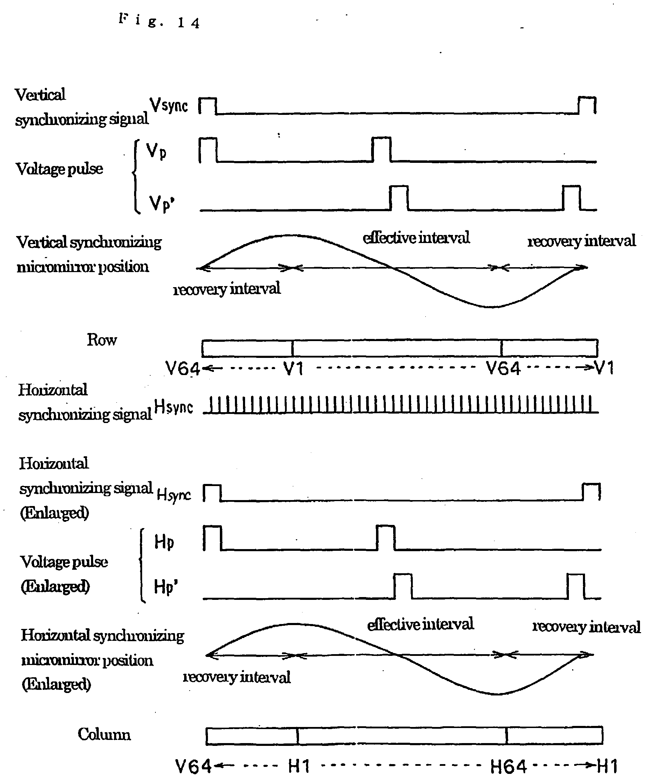

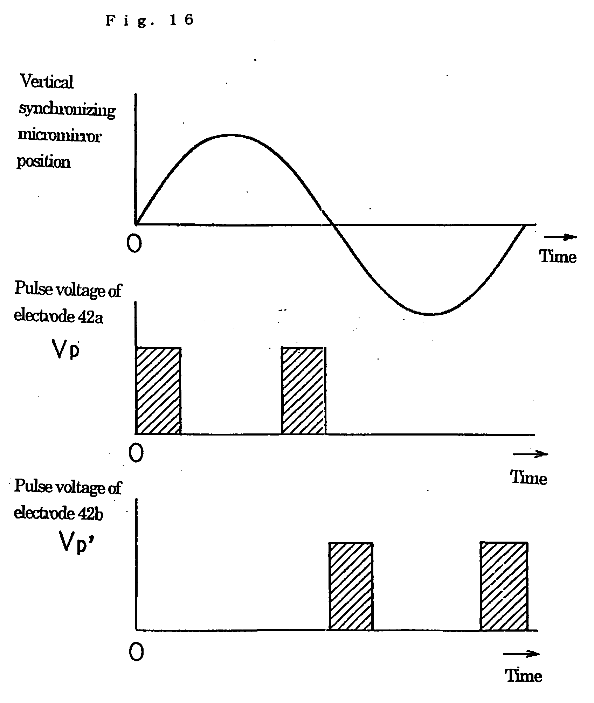

Turning now to Figures 13 and 14, a simple explanation is presented regarding the overall operation of this embodiment. First, upon the incidence of infrared light, the light is condensed by objective 31 and converted to parallel light rays by collimator lens 32. The parallel light rays are directed to vertical synchronizing micromirror 33. At this time, voltage pulses Vp and Vp' shown in Fig. 14 are applied to electrode 42. Pulses Vp and Vp' are outputted two times during one period of the output of vertical synchronizing signal Vsync with vertical synchronizing signal Vsync as a trigger. As described hereinbelow, vertical synchronizing micromirror 33 changes its position in synchronization with the output of these pulses Vp and Vp' shown in Fig. 16 and scans the parallel light rays in the y-direction (vertical direction). The parallel light rays that have been scanned by vertical synchronizing micromirror 33 are reflected by fixed mirror 35 and directed to horizontal synchronizing micromirror 34. At this time, voltage pulses Hp and Hp' as shown in Fig. 14 are applied to electrode 43. Pulses Hp and Hp' are outputted two times during one period of the output of horizontal synchronizing signal Hsync, with horizontal synchronizing signal Hsync as a trigger. As described hereinbelow, horizontal synchronizing micromirror 34 changes its position in accordance with pulses Hp and Hp' in the same way that the position of the vertical synchronizing micromirror changes in accordance with pulses Vp and Vp' shown in Fig. 16 and scans the parallel light rays in the x-direction (horizontal direction). The parallel light rays that have been scanned by horizontal synchronizing micromirror 34 are reflected by fixed mirror 36, directed to thermoelectric element 4, and converted to an electrical signal. Then, as described hereinabove, the incidence of infrared light is sensed by measuring device 21 shown in Fig. 6 and diaphragm 2 is maintained at a fixed temperature by reference thermoelectric element 5 and electrothermic element 3.

As shown in Figs. 12-14, the range of imaging is divided into pixels of 64 rows × 64 columns, and if these are identified as Row V1- Row V64 and Column H1 - Column H64, when vertical synchronizing micromirror 33 is selecting, for example, Row V1, horizontal synchronizing mirror 34 scans from Column H1 to Column H64 and the signals of the pixels of each column are outputted. The signals of all pixels can be read by carrying out this process for each row from Row V1 to Row V64.

Each of micromirrors 33 and 34 moves back and forth within one period, and there is consequently an effective interval and a recovery interval in one vertical synchronizing interval, shown in Fig. 14. In the effective interval, signals are outputted in the direction from Row V1 to Row V64, and in a recovery interval, signals are outputted in the direction from Row V64 to Row V1. Since scanning during the recovery interval is in the opposite direction of the effective interval, it is difficult to use the outputted signals for pixel reading without first modifying them. The constitution can be therefore be simplified by using only signals of effective intervals and not using signals of recovery intervals.

However, in a case requiring that the S/N ratio be improved as much as possible or that the frame frequency be raised, signals of the recovery interval can also be used for pixel reading. Using the signals of the recovery intervals allows signals of the same pixels to be read twice per frame, and the S/N ratio can then be improved by adding the signals. Alternatively, the frame frequency can be raised by reading two frames within one period of vertical synchronizing signals. In order to use signals of recovery interval for pixel reading, however, a memory and control circuit is necessary for reordering signals that are read in the reverse direction.

In the horizontal synchronizing interval as well, either a method in which recovery interval signals are used for pixel reading or a method in which the signals are not used can be selected.

A semiconductor substrate such as silicon can be used as substrate 1. Alternatively, a structure in which silicon single crystal is formed on an insulating substrate such as sapphire using a technology of forming silicon on an insulator (SOI [Silicon-on-Insulator] technology).

As in infrared imaging devices of the prior art, objective 31 may be constituted by a plurality of lenses (for example, three lenses) to improve F-number or aberration, or may be constituted by a single lens to reduce costs.

Lenses 31 and 32 are both formed from, for example, germanium, which has a high transmittance for infrared light having a wavelength in the vicinity of 10 microns, whereby high performance can be obtained with regard to sensitivity and resolution (MTF: Modulation Transfer Function). Reflection optical system and diffraction optical system may also be used. Alternatively, refracting, reflecting, and diffracting microlenses may be arranged on the same substrate 1 to lower costs.

The drive method of micromirrors 33 and 34 has been described in detail in Japanese Patent Application 205707/97 filed by the present applicants. A brief explanation follows hereinbelow.

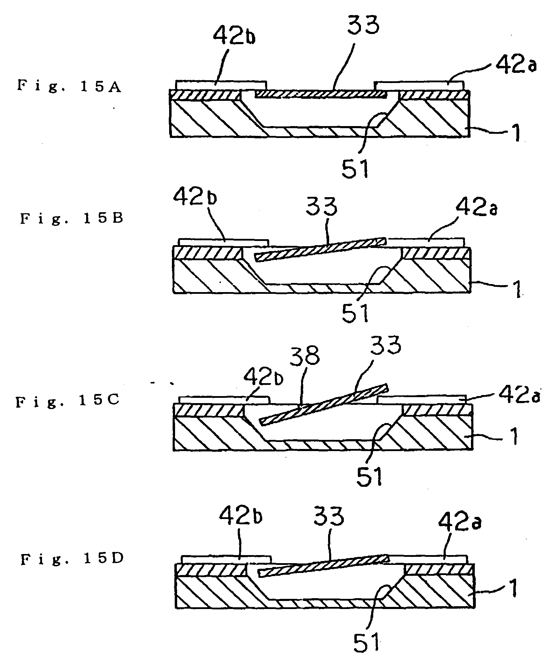

Fig. 15 shows the operation of micromirror 33, and Fig. 16 shows the timing of applied pulses. In the state shown in Fig. 15A, micromirror 33 is in a horizontal position. In this horizontal position, micromirror 33 is positioned below electrodes 42a and 42b. When a voltage pulse is applied to electrode 42a, an electrostatic attraction that can be expressed by equation (9) works between electrode 42a and micromirror 33, which is at ground potential, and micromirror 33 begins to be displaced. In equation (9), ÄS represents area, ÄF represents the force that works on that area, $\varepsilon$ represents the dielectric constant, and ÄE represents the electric field present in that area.

$$\Delta F = \varepsilon \, \frac{\Delta S \Delta E^2}{2} \qquad (9)$$

The application of voltage to electrode 42a halts when micromirror 33 has been displaced far enough to reach the height of electrode 42a. Even after the application of voltage has halted, the force of inertia works on micromirror 33, and micromirror moves past the electrode as shown in Fig. 15B. Voltage is again applied to electrode 42a when the displacement has surpassed a peak (Fig. 15C), and the rotation of micromirror 33 in the direction of recovery accelerates. The same operation as for electrode 42a can then be carried out by applying voltage to electrode 42b after micromirror 33 has reached a horizontal position. Fig. 16 shows the voltage pulses for one period of the above-described operation. The same operation can be carried out for micromirror 34 by supplying voltage to electrodes 43.

Increasing the area of micromirrors 33 and 34 raises the problem of excessive chip size (diaphragms 40 and 41), while reducing the area of the micromirrors complicates the alignment of the optical axes and reduces the effective area of the detecting units (This term includes an infrared light absorbing layer, thermoelectric element 4, and electrothermic element 3, but not reference thermoelectric element 5.). Considering the current stepper exposure area of about 30 mm × 30 mm, the maximum area of one micromirror 33 when forming one of micromirrors 33 and 34 on a chip is about 30 mm × 30 mm, but in the interest of increasing wafer yield, the area of one of micromirrors 33 and 34 is preferably less than 20 mm × 20 mm. In order to form two micromirrors 33 and 34 on the same chip, the maximum area of one of micromirrors 33 and 34 is 15 mm × 15 mm, and an area less than 10 mm × 10 mm is preferable.

In addition, since the effective area of a detecting unit is less than or equal to approximately 25 μm × 25 μm, the minimum area (effective area × number of pixels) of one of micromirrors 33 and 34 for a case in which the number of pixels is on the order of 100 rows by 100 columns, such as would be used in an induction device, would be 2.5 mm × 2.5 mm. For a case in which the number of pixels is on the order of 32 rows by 32 columns, which would allow only a rough perception of an object, the minimum area of one of micromirrors 33 and 34 would be approximately 0.8 mm × 0.8 mm.

The resonance frequency f of micromirrors 33 and 34 can be calculated using equations (10) - (13).

$$f = \frac{1}{2\pi}\sqrt{\frac{K}{I}} \qquad (10)$$

$$K = \frac{\pi G d^4}{32L} \qquad (11)$$

$$I = \frac{M}{3}a^3 \qquad (12)$$

$$M = 4abpt \qquad (13)$$

Here, K represents the spring constant, I represents moment of inertia, G represents the modulus of transverse elasticity of the beams, d represents the diameter of the beams, L represents the length of the beams, M represents the weight of micromirrors 33 and 34, a represents half the length of micromirrors 33 and 34, b represents half the width of micromirrors 33 and 34, and t represents the thickness of micromirrors 33 and 34.

A structure of micromirror 33 and beam 38 that resonates at the vertical synchronizing frequency is considered by substituting actual values that are considered preferable. If the number of pixels is 64 rows × 64 columns and the effective area of the detecting unit is 100 μm, the area of micromirror 33 will be 6.4 mm × 6.4 mm (a = b = 3.2 mm ).

Silicon single crystal, which has high shear fracture stress, is preferably used as the material for beam 38, and the fabrication processes are simplified if the same material as the beam is used as the material for micromirror 33. Since silicon single crystal transmits infrared light, a reflective film of, for example, aluminum 49 is formed on micromirror 33. Making the thickness t of micromirror 33 the same as the diameter d of beam 38 simplifies the fabrication process. The stress placed on beam 38 can be reduced by making the length L of beam 38 longer than the diameter d of beam 38. If the angle of twist of micromirror 33 is approximately 10°, L/d is preferably at least 25. The density of silicon single crystal is approximately $2 \times 10^3$ kg/m$^3$, the modulus of transverse elasticity G is approximately $9 \times 10^{10}$ N/m$^2$, and the vertical synchronizing frequency f is 30 Hz. Considering the above values, L/d > 25 can be satisfied by making d and t equal to or greater than 5 μm. If d and t are increased, however, L also increases, L being approximately 7 mm when d and t are 20 μm. The variables d and t should be at least 5 μm and should not exceed 20 μm.

The structure of micromirror 34 and beam 39, which resonate at the horizontal synchronizing frequency, can be designed in the same way. However, since the horizontal synchronizing frequency is normally a high frequency, difficulty is often encountered in increasing the value L/d to a high level. In this case, L/d can be increased by making the thickness t of micromirror 34 smaller than d and making the area of micromirror 34 as small as possible. As shown in Figs. 12 and 13, the components are preferably arranged in the order of: lenses 31 and 32, vertical synchronizing micromirror 33, and horizontal synchronizing micromirror 34, whereby, from the standpoint of optical design, the area of horizontal synchronizing micromirror 34 can be reduced, and L/d can be increased.

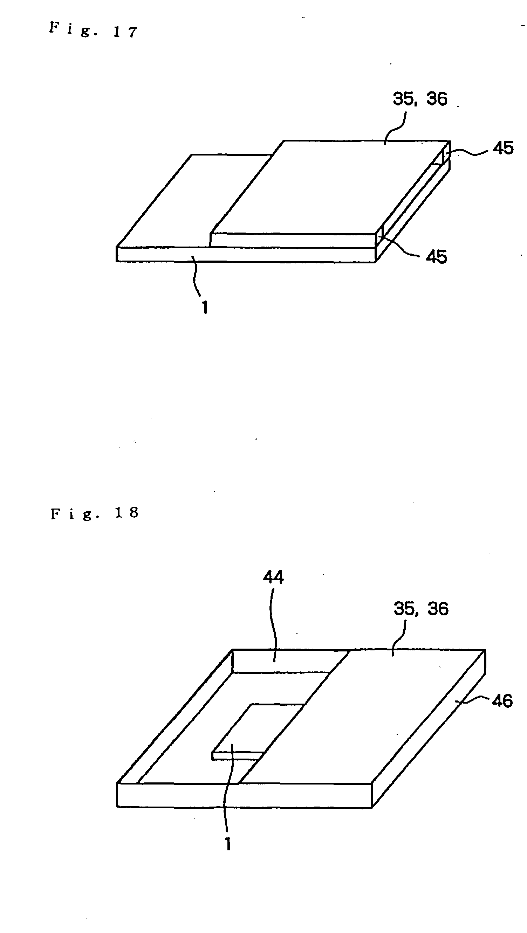

Fixed mirrors 35 and 36 are arranged above substrate 1. As one example of a method of arrangement, spacer 45 is disposed on substrate 1 and fixed mirrors 35 and 36 are arranged on this spacer 45, as shown in Fig. 17. Alternatively, as shown in Fig. 18, spacer 45 can be disposed on package 46 rather than on substrate 1. Forming fixed mirrors 35 and 36 on top of package 46, on which the infrared detector is arranged, necessitates transmissive portion 44 composed of germanium, which transmits infrared light, on package 46. If the distance between substrate 1 and fixed mirrors 35 and 36 is great, the angle of displacement of micromirrors 33 and 34 can be made small. In addition, the interior of package 46 is made a vacuum so as to reduce the heat conductance of diaphragm 2. Finally, fixed mirrors 35 and 36 may be a single unit as shown in Figs. 17 and 18, or may be formed separately.

Explanation is next presented regarding the method of fabricating this thermal infrared detector (imaging device). Various circuits including control circuit 37 are formed in semiconductor substrate 1 using normal LSI fabrication processes. Although not shown in the figure, these circuits include CMOS transistors, bipolar transistors, diffused resistors, and capacitors. The use of bipolar transistors in operational amplifier 19 has the advantage of improving S/N ratio and offset voltage and preventing drift. An analog circuit based on CMOS transistors may also be used, and this allows a decrease in the number of manufacturing processes and a reduction of fabrication costs.

Since silicon single crystal is preferably used as the material for micromirrors 33 and 34 and beams 38 and 39, a high-concentration $n$-type semiconductor layer is formed so that this portion remains in subsequent anisotropic etching. A high-concentration $n$-type semiconductor layer has the property of resisting etching by the alkaline solution used in anisotropic etching. This embodiment employs $p$-type semiconductor substrate 1.

Insulating layer 6 composed of a silicon oxide layer is next formed. Boron-phosphorus-silicate glass (BPSG) doped with boron and phosphorus is particularly well suited as a material for insulating layer 6 because it allows good covering of changes in level. Silicon oxide layer 6 is formed in two layers to form cavity 7 below diaphragm 2. In concrete terms, silicon oxide layer 6a is formed on substrate 1 to a thickness of, for example, 1 μm, following which polysilicon is formed to a thickness of 1 μm in the portion that will become cavity 7 and patterned, and then silicon oxide layer 6b is formed to a thickness of 1 μm.

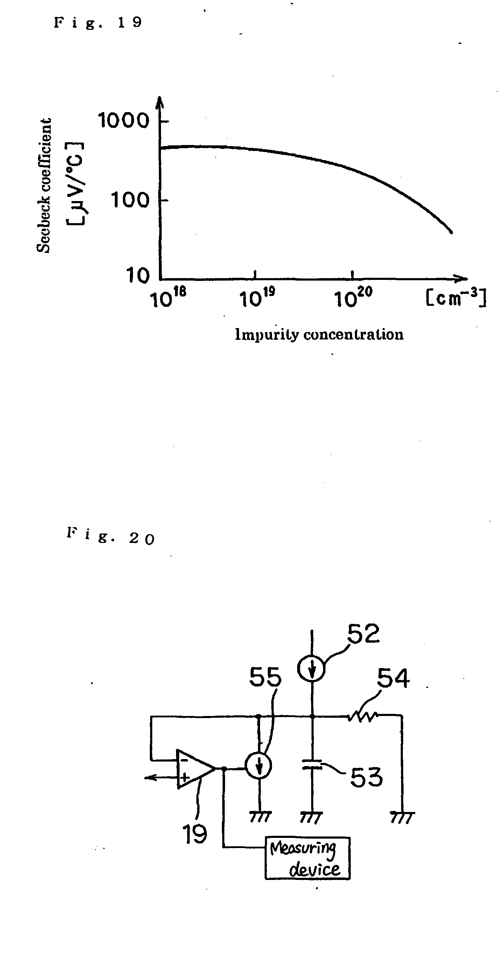

Another silicon oxide layer 8 is then formed on silicon oxide layer 6b, and then polysilicon which is to become Peltier element 3 is formed to a thickness of 0.1 μm. $P$-type semiconductor 11, which is doped with boron by a method such as ion implantation, is formed in one portion of the polysilicon. $N$-type semiconductor 12, which is doped with phosphorus or arsenic, is then formed on the remaining portion of the polysilicon. If the impurity concentration in the polysilicon is higher than $10^{20}$ [cm$^{-3}$], the Seebeck coefficient or Peltier coefficient drops, as shown in Fig. 19. If the impurity concentration is less than $10^{18}$ [cm$^{-3}$], the specific resistance becomes extremely large, and the impurity concentration is therefore set within the range of $10^{18}$-$10^{20}$ [cm$^{-3}$]. $P$-type semiconductor 11 and $n$-type semiconductor 12 together constitute Peltier element 3.

Silicon oxide layer 14 is formed to a thickness of 0.2 μm on Peltier element 3, contact hole 48 is formed, and then aluminum layer 13, which is to be the circuit wiring and Peltier element 3 contacts, is formed to 1 μm. Titanium, which is to become thermoelectric element (bolometer) 4, is then formed to 0.1 μm on aluminum layer 13. In this construction, a silicon oxide layer is not formed between aluminum layer 13 and titanium bolometer 4, the two layers being in direct contact. After silicon oxide layers 6, 8, and 14 are removed above micromirrors 33 and 34, aluminum layer 49 is also formed in this portion to serve as the reflecting layer of micromirrors 33 and 34. Aluminum layer 50 is similarly formed in the portions that are to become electrodes 42 and 43. Aluminum layers 13, 49, and 50 are all formed at the same time.

Silicon oxide layer 15 is formed to 1 μm and a titanium nitride (metal thin film) 16 is formed to 10 nm on the titanium, these layers being the infrared light-absorbing layer. Based on the formula $\lambda/(4n)$, infrared light having a wavelength of 10 μm can be absorbed if the refractive index of silicon oxide layer 15 is 2.5 and its thickness is 1 μm. A sheet resistance of 377 Ω/□ is obtained if titanium nitride 16 is made 0.1 nm thick.

Finally, cavity 7 and concavities 51 below micromirrors 33 and 34 are formed by anisotropic etching. KOH, tetramethyl ammonium hydroxide (TMAH), or hydrazine can be used as the etchant, as in the prior art. To limit etching to only the polysilicon and the silicon single crystal below the micromirrors, slit 9 that reaches the polysilicon is provided before etching, and a silicon oxide layer is formed on the underside of substrate 1 so that only the silicon oxide layer below the micromirrors is exposed. Etching is completed when the polysilicon and silicon single crystal below the micromirrors are removed. In this way, cavity 7 of substrate 1 and concavities on the back surface of the substrate are formed simultaneously.

In this embodiment, a bulk micromachining method, which is used in the prior art for fabricating acceleration sensors, is employed as a method of forming concavities 51 in substrate 1 in which are located the micromirrors that exhibit large displacement. A surface micromachining method, which has been used in recent years in fabricating, for example, infrared beam sensors, is employed as a method of forming cavities in the surface of the substrate. However, the fabrication process can be simplified by using the surface micromachining method to form both cavity 7 and concavities 51. In addition, the bulk micromachining method may also be employed for fabricating either cavity 7 or concavities 51.

By using thermal feedback to keep diaphragm 2 at a fixed temperature, the present embodiment has the advantages of avoiding the influence by the thermal time constant of diaphragm 2, and greatly improving the speed of response to incident infrared light. In an ordinary thermal infrared detector, the influence of the thermal time constant of diaphragm 2 slows the response time to incident infrared to several tens of ms. However, maintaining diaphragm 2 at a fixed temperature allows a marked decrease in response time. In addition, thermoelectric element 4 senses the application of thermal energy caused by infrared radiation and electrothermic element 3 acts to offset the thermal energy before the temperature of diaphragm 2 actually rises, thereby enabling high-speed response and enabling the maintenance of a fixed temperature.

Incident infrared light is detected by reading compensating signals at measuring device 21, and these compensating signals in turn drive electrothermic element 3 to maintain diaphragm 2 at a fixed temperature. This configuration can be easily understood by replacing the above-described thermal phenomena with the electrical circuit shown in Fig. 20. In Fig. 20, incident infrared light can be replaced by current source 52, the thermal capacity of diaphragm 2 by capacitor 53, the thermal resistance of diaphragm 2 by resistor 54, and electrothermic element 3 by voltage controlled current source 55. If this electrical circuit is simulated by a circuit simulator (for example, SPICE [Simulation Program Integrated Circuit Emphasis] developed at Stanford University, a signal is obtained in the output of operational amplifier 19 that is proportional to change in the current of current source 52.

In the present embodiment, the limits of response time are determined by such factors as the response time of operational amplifier 19, resistance inherent to the wiring, and the time constant of capacitance. Normally, the time of these factors is too small to bear comparison with the thermal time constant of diaphragm 2. Since the thermal time constant of diaphragm 2 is negligible in this embodiment, the present embodiment is extremely advantageous.

The present embodiment is also advantageous because it allows an improvement in the linearity of thermoelectric conversion. In an infrared light detector of the prior art, the temperature of diaphragm 2 changes due to the incidence of infrared light, the temperature of diaphragm 2 undergoing particularly large changes when applied for imaging an extremely hot or cold imaged object. The temperature coefficient of resistance (TCR) of thermoelectric element 4 often changes due to the temperature, and change in the temperature of diaphragm 2 therefore leads to deterioration in linearity. In the present embodiment, changes in the temperature of diaphragm 2 are suppressed and linearity therefore is markedly improved.

As another advantage of the present embodiment, the lack of changes in the temperature of diaphragm 2 makes the device of this embodiment difficult to detect by other detectors, this point being particularly advantageous in night vision devices or guiding devices for military use. In infrared detectors of the prior art, thermoelectric element 4 generated heat due to, for example, current flowing in thermoelectric element 4, and diaphragm 2 exhibited rises in temperature. These rises in temperature were as high as several tens of degrees C, raising the possibility of detection by other infrared detectors. The present embodiment allows a solution to this problem.

As still another advantage of the present embodiment, the combination of micromirrors 33 and 34 with a detecting unit capable of high-speed response enables the fabrication of an extremely inexpensive and compact thermal infrared detector. The methods adopted in the prior art for obtaining a two-dimensional infrared image included pickup by means of a large number of detecting units arranged in a two-dimensional array, or pickup by combining one detecting unit or a plurality of detecting units aligned in one row with an optical scanner. When using a plurality of detecting units, the high degree of variation between normal infrared detecting units resulted in the need for a circuit to correct variation. These variations included both offset, which is variation in dc levels, and variation in sensitivity. A variation compensating circuit is composed of a memory for holding variations of detecting units, a A/D converter, and a D/A converter, and a large-scale circuit is therefore required to compensate for offset and variations in sensitivity. Correcting variation further necessitates mechanical components such as choppers or shutters for the primary shielding of incident infrared light. To compensate for sensitivity, a sensitivity table must be produced of each pixel using infrared light sources of different temperatures when adjusting at the time of shipping a product. In the prior art, quantum detecting units capable of high-speed response such as indium-antimony or mercury-cadmium-tellurium have been used as detecting units in constructions in which an optical scanner is combined with one detecting unit or one row of detecting units.

When a small number of detecting units are used with time sharing to obtain a large number of pixels, high-speed response is demanded of the detecting units. However, as described hereinabove, thermal infrared detectors of the prior art were not capable of the high-speed response achieved in this invention, and quantum detecting units were therefore used to achieve the greatest possible speed. In principle, quantum detecting units must be cooled to a low temperature for use, and this cooling equipment was both extremely expensive and bulky.

In contrast, the thermal infrared detector of the present embodiment can be constituted by a single detecting unit, thereby allowing a reduction in the number of parts and the number of adjustment processes. The thermal infrared detector of the present embodiment further eliminates the need to compensate for variation, and since it is capable of high-speed response, also eliminates the need for quantum-type detecting units, resulting in an extremely inexpensive and compact device.

Another advantage of the present embodiment is a substantial improvement in drift, which was a problem in the thermal infrared detector of the prior art. Drift is a phenomenon in which variation occurs in the offset (DC level) between pixels due to temperature changes of the device. The biggest cause of drift is variation in sensitivity between detecting units. A detecting unit is sensitive to the substrate temperature, and when the temperature of the device changes, the DC level also changes. Variation in sensitivity between detecting units results in differences in the amount of change of DC levels by pixel. The thermal infrared detector of the present embodiment is constituted by a single detecting unit, thereby eliminating variation in sensitivity between pixels and preventing the occurrence of this problem.

A modification of the present embodiment is next described. In order to raise resolution of the screen, i.e., to increase the number of pixels in one screen, the area of diaphragm 2 must be reduced. This is because the area of the parallel rays is the area of one screen, and the area of diaphragm 2 is the area of one pixel. However, thermoelectric element 4 and electrothermic element 3 are formed on diaphragm 2, and the necessary microscopic processing therefore imposes limits on reducing the area of diaphragm 2.

To solve this problem, the modification shown in Fig. 21 is a case in which shield screen 61 for cutting off incident infrared light is provided above diaphragm 2, and hole 62 is opened in shield screen 61. Hole 62 is formed in a position that directs transmitted infrared light to diaphragm 2. The area of hole 62 (effective detection area) is less than the area of diaphragm 2, and is determined by the required resolution. However, although resolution may improve as the area of hole 62 decreases, sensitivity falls, and both factors must be taken into consideration in determining the area of hole 62. With this approach, the effective area can be made just several tens of μm on each side (for example, 25 μm × 25 μm) even though the area of diaphragm 2 is several hundred μm on each side, thereby allowing more leeway in processing accuracy.

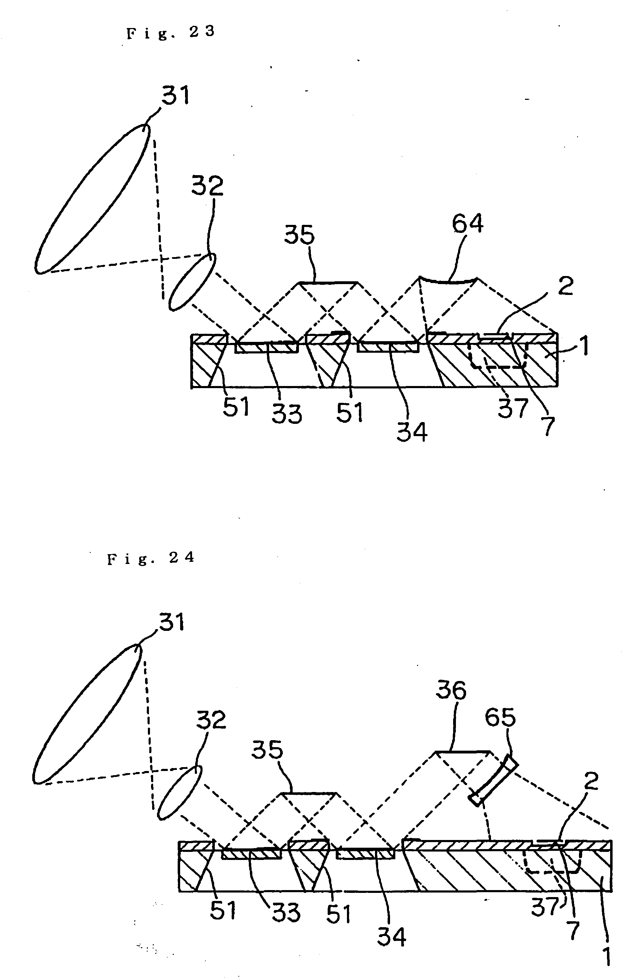

Fig. 22 shows a case in which infrared absorbing layer 63 is formed only in one portion on diaphragm 2. The area in which infrared absorbing layer 63 is formed becomes the effective area, and the effective area can therefore be made small even if the area of diaphragm 2 itself is large. In this case, forming a reflecting layer of aluminum or titanium on portions of diaphragm 2 other than the portion in which infrared absorbing layer 63 is formed allows a further improvement of MTF, which is an index of resolution.

Increasing the area of the parallel beam also improves resolution. Using convex mirror 64 as a fixed mirror to spread the parallel rays as shown in Fig. 23 improves resolution even when the area of diaphragm 2 is large, and has the same advantage as reducing the area of diaphragm 2.

Providing concave lens 65 between fixed mirror 36 and diaphragm 2 to spread the parallel light rays as shown in Fig. 24 has the advantage of improving resolution, as in the construction shown in Fig. 23.

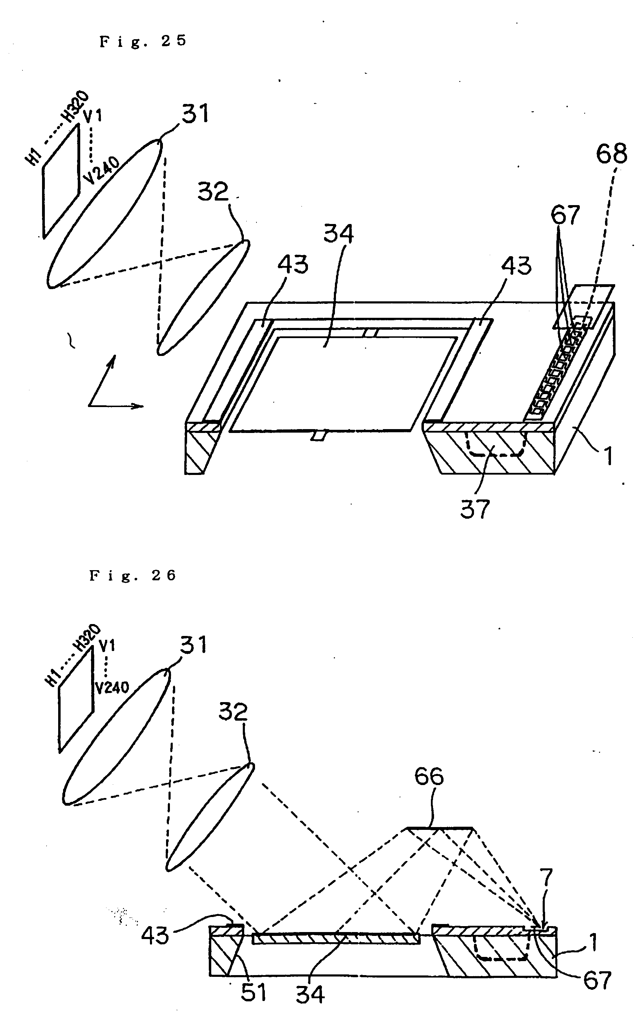

Figs. 25-27 show a thermal infrared detector, which is a functional device according to the second embodiment of the present invention. This device is a construction employing one micromirror 34 and a plurality of detecting units 67 aligned in one row. Constituent features that are the same as those in the first embodiment are given the same reference numbers and explanation is here omitted.

The thermal infrared detector of this embodiment comprises: objective 31 for condensing incident light, collimator lens 32 for converting the condensed beam to parallel light rays, micromirror 34 for scanning incident light on substrate 1 in the y-direction (vertical direction), fixed mirror 66 for returning the light that was reflected by micromirror 34 back to substrate 1, a plurality of detecting units 67 aligned in one row on substrate 1, and circuits for driving micromirror 34 and controlling detecting units 67.

The thermal infrared detector of this embodiment eliminates vertical synchronizing micromirror 33 from the construction of the first embodiment, and instead, is a construction in which a plurality of detecting units 67 are aligned in one row for reading pixels in the horizontal direction. For example, 320 thermal detecting units 67 having an area of (25 μm × 25 μm) are arranged in the x-direction (horizontal direction).

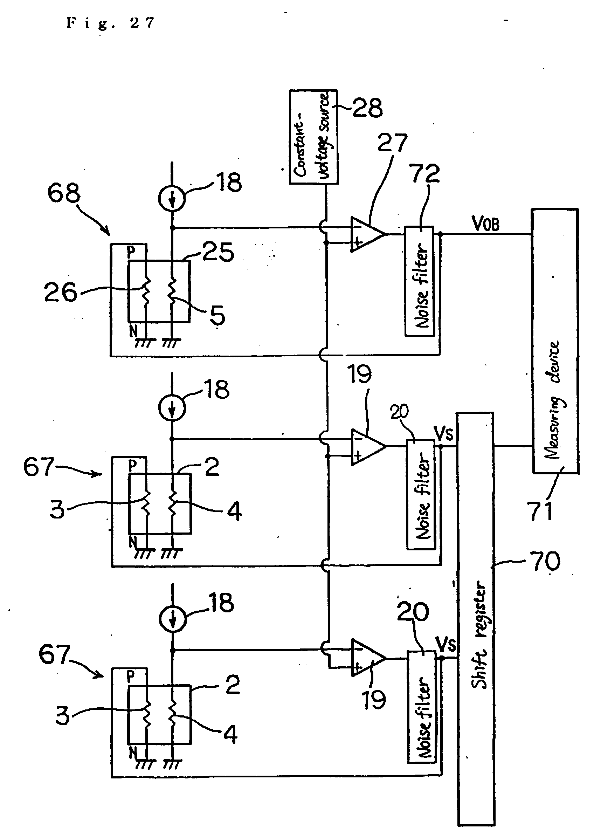

The control circuit for each of detecting units 67 is essentially the same as the construction shown in Fig. 10. Specifically, the construction of electrothermic element 3, thermoelectric element 4, constant-current source 18, operational amplifier 19, and noise filter 20 in each detecting unit 67 as shown in Fig. 27 is essentially the same as the construction shown in Fig. 10. Signal voltage (compensating signals) $V_s$ outputted from each detecting unit 67 is stored in shift register 70. In addition, reference thermoelectric element 5, constant-voltage source 28, and additional electrothermic element 26, which constitute reference unit 68, are essentially the same as the construction shown in Fig. 10. This reference unit 68 is a construction in which reference thermoelectric element 5 and electrothermic element 26 are arranged on diaphragm 25, which is shielded from the effect of infrared light radiation by a shield screen that is not shown in the figure.

In this embodiment, the signal voltage (compensating signal) $V_s$ of each detecting unit 67 that is outputted from each detecting unit 67 and stored in shift register 70 is sequentially compared in measuring device 71 with the OB voltage (compared signal) $V_{OB}$ that is outputted from the single reference unit 68. If sig-

nal voltage $V_s$ from any detecting unit 67 differs from OB voltage $v_{OB}$, measuring device 71 calculates the amount of infrared radiation by finding the difference between this signal voltage and OB voltage $(V_s - V_{OB})$ and then finding the amount of thermal energy applied to diaphragm 2 of that detecting unit 67 based on the amount of infrared radiation. At the same time, diaphragm 2 of each detecting unit 67 is controlled to a fixed temperature, as in the first embodiment.

In this embodiment, noise can be reduced by using a plurality of detecting units 67 aligned in one row. Each detecting unit 67 is provided for a respective row (Row H1 - Row H320), and the outputs of the detecting units are read sequentially. As a result, the cutoff frequency of a low-pass filter can be set to a multiple (2-10 times) of the horizontal synchronizing frequency (for example, 15 kHz) to narrow the noise frequency band and reduce noise. In this way, noise can be sufficiently suppressed even for high-definition uses in which horizontal synchronizing frequency is high. The present embodiment therefore enables the easy realization of, for example, a low-noise infrared imaging device having $320 \times 240$ pixels.

The infrared detector of this embodiment allows the temperature of diaphragm 2 to be easily set to the temperature that suits the characteristics of the thermoelectric element on the diaphragm, including a low temperature such as the temperature of liquid nitrogen or a high temperature of 130°C. In addition, the thermal time constant of diaphragm 2 can be set to substantially zero, and energy that is directed onto or generated on diaphragm 2 can be extremely rapidly offset.

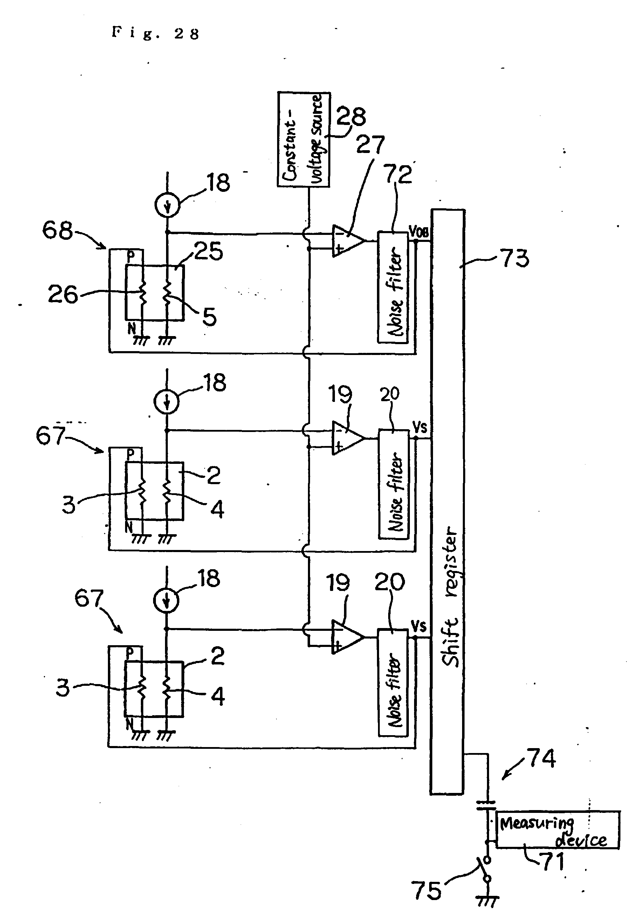

Fig. 28 shows a modification of this embodiment. In this modification, not only the signal voltage (compensating signal) $V_s$ of each detecting unit 67, but the OB voltage (compared signal) $V_{OB}$ of reference unit 68 is outputted to shift register 73. Shift register 73 is then connected to clamp circuit 74. Switch 75 of clamp circuit 74 turns ON the instant OB voltage $V_{OB}$ is received, whereby output that has passed through clamp circuit 74 becomes the difference $(V_s - V_{OB})$ between the signal voltage and OB voltage. In addition, the difference $(V_s - V_{OB})$ can also be found without using clamp circuit 74 by successively A/D converting signals from all pixels including OB voltage $V_{OB}$ of reference unit 68, entering the signals to a memory, and subtracting digital values.

While preferred embodiments of the present invention have been described using specific terms, such description is for illustrative purposes only, and it is to be understood that changes and variations may be made without departing from the spirit or scope of the following claims.

**Claims**

1. A thermal functional device, comprising: a diaphragm;

a thermoelectric element disposed on said diaphragm for converting heat to an electrical signal;

an electrothermic element disposed on said diaphragm adjacent to said thermoelectric element for converting an electric signal to heat;

a reference signal generating means for supplying a reference signal to be compared with the output signal of said thermoelectric element for controlling driving of said electrothermic element; and

a comparing means for comparing said reference signal from said reference signal generating means and the output signal of said thermoelectric element, and for supplying to said electrothermic element a compensating signal that compensates for the difference between said reference signal and the output signal of said thermoelectric element to drive said electrothermic element.

2. A thermal functional device according to claim 1, wherein said diaphragm is disposed above a cavity disposed in a substrate and said comparing means is disposed in said substrate.

3. A thermal functional device according to claim 1, wherein said reference signal generating means is a constant-voltage source.

4. A thermal functional device according to claim 1, wherein said reference signal generating means is a reference thermoelectric element.

5. A thermal functional device according to claim 1, further comprising detecting means for being supplied with said compensating signal from said comparing means and detecting the incidence of energy to said thermoelectric element based on said compensating signal.

6. A thermal functional device according to claim 1 wherein said reference signal generating means is a constant-voltage source; and

further comprising a reference thermoelectric element, an additional electrothermic element disposed in the vicinity of said reference thermoelectric element, an additional comparing means for outputting the difference between the output signal of said reference thermoelectric element and reference voltage from said constant-voltage source as a compared signal and a detecting means for detecting the incidence of energy to said thermoelectric element based on the difference between said compensating signal and said compared signal.

**7.** A thermal functional device according to claim 4,

further comprising a detecting means for detecting the incidence of energy to said thermoelectric element; and wherein said reference thermoelectric element is kept in a non-responsive state with respect to said energy.

**8.** A thermal functional device according to claim 7, further comprising a shielding member for intercepting the incidence of energy to said reference thermoelectric element.

**9.** A thermal functional device according to claim 7, wherein said energy is incident energy of electromagnetic waves.

**10.** A thermal functional device according to claim 9, wherein said electromagnetic waves are infrared rays.

**11.** A thermal functional device according to claim 9, further comprising mirror means for directing said electromagnetic waves that are incident from the outside toward said thermoelectric element.

**12.** A thermal functional device according to claim 11, wherein said mirror means includes a pair of movable mirrors each capable of angular change in a direction substantially orthogonal to the other.

**13.** A thermal functional device according to claim 12, wherein said mirror means further comprises mirrors fixed with respect to said diaphragm for reflecting said electromagnetic waves reflected by said movable mirrors.

**14.** A thermal functional device according to claim 1, wherein said thermoelectric element contains titanium as a major component.

**15.** A thermal functional device according to claim 6, wherein both of said thermoelectric element and said reference thermoelectric element contains titanium as a major component.

**16.** A thermal functional device according to claim 1, wherein said thermoelectric element contains silicon as a major component.

**17.** A thermal functional device according to claim 6 wherein both of said thermoelectric element and said reference thermoelectric element contains silicon as a major component.

**18.** A thermal functional device according to claim 16, wherein said silicon includes impurities at a con-

centration of $10^{18}$-$10^{20}$ [cm$^{-3}$].

**19.** An energy detector comprising in which a plurality of said thermoelectric elements of the thermal functional device according to claim 1 arranged in a line.

**20.** A method of driving a thermal functional device, comprising steps of:

comparing the output of a thermoelectric element disposed on a diaphragm with a reference signal supplied from a reference signal generating means; and supplying, to an electrothermic element on said diaphragm adjacent to said thermoelectric element, a compensating signal to compensate for the difference between said two signals based on the comparison result from said comparing means to drive said electrothermic element.

**21.** A method of driving a thermal functional device according to claim 20, further comprising the step of detecting the energy incident to said thermoelectric element based on said compensating signal.

**22.** A method of driving a thermal functional device according to claim 20, wherein said reference signal generating means is a constant-voltage source, further comprising the steps of:

outputting the difference between the output signal of a reference thermoelectric element and reference voltage from said constant-voltage source as a compared signal; and detecting energy incident to said thermoelectric element based on the difference between said compensating signal and said compared signal.

Fig. 1

(Prior Art)

(Prior Art)

Fig. 2

Fig. 3

Fig. 4

Fig. 5

Fig. 6

F i g. 7

```
                    ┌─────────────┐
                    │    START    │
                    └─────────────┘
                           │
                           ▼              ╭─201
        ┌──────────────────────────────────────────┐
        │ Output signals from thermoelectric element 4│
        │  and reference thermoelectric element 5    │
        └──────────────────────────────────────────┘
                           │
                           ▼                ╭─202
                    ◇─────────────────◇
                   Does a different exist         No
                 between the two signals ?  ──────────┐
                    ◇─────────────────◇              │
                           │                          │
                          Yes                         │
                           │              ╭─203       │
                           ▼                          │
        ┌──────────────────────────────────────────┐ │
        │ Supply compensating signal to measuring    │ │
        │  device 21 and electrothermic element 3    │ │
        └──────────────────────────────────────────┘ │
                           │              ╭─204       │
                           ▼                          │
        ┌──────────────────────────────────────────┐ │
        │  Electrothermic element 3 offsets the      │ │
        │  change in temperature of diaphragm 2      │ │
        └──────────────────────────────────────────┘ │
                           │◄─────────────────────────┘
                           ▼
                    ┌─────────────┐
                    │     END     │
                    └─────────────┘
```

Fig. 8A
Incident Power

High temperature
Normal temperature
Low temperature

Time

Fig. 8B
Output voltage

Time

Diaphragm temperature
Fig. 8C

Time

Fig. 9

18

P
2
3
N
4

Constant-voltage source
22

19

20
Noise filter

Measuring device
21

Fig. 10

Fig. 11

```
         205                                    210

┌─────────────────────────────┐   ┌─────────────────────────────┐
│ Output signals from thermoelectric │   │ Output signals from reference thermoelectric │
│ element 4 and constant voltage source 28 │   │ element 5 and constant voltage source 28 │
└─────────────────────────────┘   └─────────────────────────────┘
              │                                  │
              ▼         206                      ▼         211
  No     ◇───────────────────◇            ◇───────────────────◇    No
  ┌──────│ Does a different exist between │    │ Does a different exist between │──────┐
  │      │    the two signals  ?          │    │    the two signals  ?          │      │
  │       ◇───────────────────◇            ◇───────────────────◇              │
  │                 │ Yes                          │ Yes                       │
  │                 ▼         207                  ▼         212              │
  │      ┌─────────────────────────┐    ┌─────────────────────────┐          │
  │      │ Supply compensating signal │    │ Supply the additional compensating signal │  │
  │      │ to electrothermic element 3 │    │ to additional electrothermic element 26 │  │
  │      └─────────────────────────┘    └─────────────────────────┘          │
  │                 │         208                  │         213             │
  │                 ▼                              ▼                         │
  │      ┌─────────────────────────┐    ┌─────────────────────────┐          │
  │      │ Electrothermic element 3 offsets │    │ Additional electrothermic element 26 │  │
  │      │ the energy applied to diaphragm 2 │    │ offsets the energy applied to diaphragm 2 │  │
  │      └─────────────────────────┘    └─────────────────────────┘          │
  │                 │         209                  │         214             │
  └────────────────▶▼                              ▼◀────────────────────────┘
         ┌──────────────────────┐     ┌──────────────────────┐
         │ Output signal voltage Vs │     │ Output OB voltage Vob │
         └──────────────────────┘     └──────────────────────┘
                    │                            │
                    └──────────┐      ┌──────────┘
                               ▼      ▼        215
         ┌──────────────────────────────────────────────────┐
         │ Find the difference between the signal voltage and OB voltage │
         │ (Vs-Vob), and calculate the amount of infrared radiation │
         └──────────────────────────────────────────────────┘
```

Fig. 12

Fig. 13

Fig. 14

Vertical
synchronizing signal Vsync

Voltage pulse { Vp
              { Vp'

Vertical synchronizing
micromirror position

effective interval          recovery interval

recovery interval

Row

V64 ←······ V1 ················· V64 ·····→ V1

Horizontal
synchronizing signal Hsync

Horizontal
synchronizing signal Hsync
(Enlarged)

Voltage pulse { Hp
(Enlarged)    { Hp'

Horizontal synchronizing
micromirror position
(Enlarged)

effective interval          recovery interval

recovery interval

Column

V64 ←···· H1 ··············· H64 ·····→ H1

Fig. 15A

Fig. 15B

Fig. 15C

Fig. 15D

F i g. 1 6

Vertical
synchronizing
micromirror
position

O                                                          Time

Pulse voltage of
electrode 42a

V p

O                                                          Time

Pulse voltage of
electrode 42b

V p'

O                                                          Time

Fig. 17

Fig. 18

F i g. 1 9

F i g. 2 0

Fig. 21

Fig. 22

Fig. 23

Fig. 24

F i g . 2 5

F i g . 2 6

Fig. 27

Fig. 28